# EUROPÄISCHE PATENTSCHRIFT

(11) **EP 2 928 637 B1**
(45) Veröffentlichungstag und Bekanntmachung des Hinweises auf die Patenterteilung: **20.07.2016**
(21) Anmeldenummer: 13830213.8
(22) Anmeldetag: 09.12.2013
(51) Int. Cl.: B23K 37/053, B23K 37/04, B23P 19/10, B23K 26/28, B29C 65/00

(54) **VORRICHTUNG ZUM EINSPANNEN UND AUSRICHTEN VON SEGMENTARTIG AUSGEBILDETEN, DÜNNWANDIGEN UND HOHLPROFILIERTEN BAUTEILEN SOWIE DEREN VERWENDUNG**
DEVICE FOR CLAMPING AND ORIENTING SEGMENTED, THIN-WALLED, HOLLOW PROFILED COMPONENTS, AND USE THEREOF
DISPOSITIF DESTINÉ AU SERRAGE ET À L'ALIGNEMENT DE PIÈCES PROFILÉES CREUSES, À PAROIS MINCES ET SOUS FORME DE SEGMENTS, ET SON UTILISATION

(30) Priorität: 10.12.2012 DE 102012024168; 19.09.2013 DE 102013110372
(43) Veröffentlichungstag der Anmeldung: 14.10.2015
(73) Patentinhaber: MT Aerospace AG, 86153 Augsburg (DE)
(72) Erfinder: HUBER, Willibald, 85305 Jetzendorf (DE)
(74) Vertreter: Grape & Schwarzensteiner
(86) Internationale Anmeldenummer: PCT/EP2013/075935
(87) Internationale Veröffentlichungsnummer: WO 2014/090739

(56) Entgegenhaltungen:
- GB-A- 835 030
- US-A- 1 884 144
- US-A- 2 615 414
- US-A- 3 684 149
- US-A- 5 435 479

## Beschreibung

Die vorliegende Erfindung betrifft eine Vorrichtung zum Einspannen und Ausrichten von segmentartig ausgebildeten, dünnwandigen und hohlprofilierten Bauteilen und deren Verwendung.

Vorrichtungen zum Einspannen von hohlprofilierten Werkstücken mit kreisförmigen Querschnitten, zum Beispiel Zylinderschüssen, Kugelschalen, Domen etc., die von außen gefräst, miteinander verschweißt oder sonstwie bearbeitet werden sollen, sind allgemein bekannt. Derartige Vorrichtungen bestehen im Wesentlichen aus radial angeordneten Segmenten, die beispielsweise mittels konischen Dornen, hydraulischen Kolben oder Ähnlichem gegen die Innenwände der Werkstücke ausfahrbar sind. Derartige Vorrichtungen sind unter anderem zur Fertigung von segmentartig ausgebildeten, dünnwandigen und hohlprofilierten Bauteilen, wie etwa Druckbehältern zur Speicherung kryogener Flüssigkeiten, insbesondere von flüssigem Wasserstoff (LH2), vorgesehen. Solche Druckbehälter bzw. Tanks können in allen automotiven Bereichen, wie der Luft- und Raumfahrt, im Schiffs- und Bootsbau und insbesondere in der Automobilindustrie, Anwendung finden. Ein großes Problem bei der Fertigung solcher Druckbehälter resultiert aus deren beliebig variierenden Formen, deren außerordentlich großen Abmessungen mit einem Durchmesser von bis ca. 6, 0 m oder mehr und einer Länge von bis zu 25 m sowie im Verhältnis dazu extrem geringen Wandstärken mit einer Wanddicke im Bereich von ca. 3,3 mm bis maximal 7 mm. Beispielhaft ist eine solche Vorrichtung in der DE 100 55 257 C2 beschrieben. Diese Vorrichtung hat sich in der Praxis ausgesprochen bewährt, obgleich sich deren Herstellung und Betrieb als verhältnismäßig aufwendig herausgestellt hat, da jedem Spannelement eine gesonderte Antriebseinrichtung, etwa in Form eines Schrittmotors oder einer Kolbeneinrichtung, als Spannbetätigungselement zugeordnet ist. Darüber hinaus ist deren Einsetzbarkeit auf die Herstellung von hohlprofilierten Werkstücken, die eine rein zylindrische Form aufweisen und gleichzeitig einen Zugang in das Innere der Werkstücke zulassen, beschränkt. So ist diese Vorrichtung aufgrund der zentrischen Anordnung der Spannelemente in einer Ebene senkrecht um die Längsachse gleichmäßig verteilt und wegen der Ausbildung der Spannelemente zueinander zur Herstellung von zum Beispiel Druckbehältern bzw. Tanks, die teilweise geschlossen und somit von außen eingeschränkt zugänglich sind, nicht geeignet.

Weiterhin ist in der DE 35 43 353 A1 eine Spanneinrichtung mit einer Mehrzahl von in mindestens einer Spannebene angeordneten, unabhängig voneinander beweglichen bzw. betätigbaren Spannelementen zur verformungsarmen Einspannung extrem dünnwandiger Werkstücke, insbesondere von Ringen und Rohren, beschrieben. Um derartige verformungsempfindlichen Werkstücke zunächst zu zentrieren, ist ein zentraler Antrieb in Form eines druckmittelbetätigten Kolbens vorgesehen. Durch eine axiale Bewegung des Kolbens werden die Spannelemente gemeinsam radial nach außen verschoben. Um die Werkstücke nach deren Zentrierung ohne nennenswerte Verformung ausgleichend einspannen zu können, ist jedes Spannelement zusätzlich mit einem individuell druckmittelbetätigten Antrieb und einem/einer diesem separat zugeordneten Fühler oder Taststange versehen, der/die bei Betätigung der Spannelemente eine Annäherung bzw. nahezu kraftlose Anlage der Spannelemente an den Werkstücken feststellt und entweder eine Abschaltung des individuellen Antriebs oder eine Klemmung des Spannelementes bewirkt.

In der DE 694 23 929 T2 ist eine Innenrohrklammer zum Ausrichten von zwei miteinander zu verschweißenden Rohren vorgeschlagen. Dabei werden zwei Sätze von Rohrspannvorrichtungen mittels jeweils einer Luftzylinder-Anordnung radial hin zu bzw. weg von der Innenwandung des jeweils zugeordneten Rohres durch eine axiale Verschiebung eines druckluftbetätigbaren Kolbens der jeweiligen Luftzylinder-Anordnung bewegt.

Aus der US 6 119 916 A geht des Weiteren eine Vorrichtung zum Ausrichten und Klemmen von zwei miteinander zu verschweißenden Rohren hervor. Eine Vielzahl von in einer Spannebene angeordneten Spannelementen ist radial von innen nach außen hin zu der bzw. von außen nach innen weg von der Innenwandung der Rohre bewegbar. Die Spannelemente sind dabei jeweils über Gelenkstangen in Kulissenführungen einer Scheibe aufgenommen, die auf einer mittigen Achse gelagert und durch pneumatisch oder hydraulisch wirkende Betätigungselemente in und entgegen dem Uhrzeigersinn begrenzt drehbar ist. Durch die Drehbewegung der Scheibe sind die Spannelemente radial verschiebbar.

Schließlich zeigt die US 5 444 902 A eine Vorrichtung zum Rundrichten und Halten eines Zylinders. Dabei sind ein oberer und unterer Rahmen zur Aufnahme des Zylinders im Bereich von dessen oberen und unteren Ende vorgesehen. An jedem der Rahmen ist eine Vielzahl von radial angeordneten Schraubspindeln vorgesehen, wobei jeweils ein Spannelement an einem Paar von Schraubspindeln angeordnet ist. Über Gleichstrommotoren sind die Schraubspindeln und damit die Spannelemente radial nach außen hin zu und nach innen weg von dem rundzurichtenden und zu haltenden Zylinder verfahrbar.

Bei der Vorrichtung nach der US 2 615 414 A sind konstruktive Maßnahmen zur Montage und Demontage der Spanneinrichtung - nicht vorhanden. So fehlt es an der Notwendigkeit solcher Merkmale überhaupt, da die Vorrichtung in das Rohr am Ende frei zugänglich eingesetzt wird und anschließend das zu fügende zylindrische Rohrsegment am Ende über die Vorrichtung geschoben wird, bis das Rohrsegment und das Rohr einander benachbart sind.

Gleiches gilt für die Vorrichtung nach der US 3 684 149 A, die in ein Rohrsegment am Ende eines Rohres und einem weiteren Rohrsegment frei zugänglich eingesetzt wird. Anschließend werden die zwei zu fügenden zylindrischen Rohrsegmente mittels Zähnen eingespannt und ausgerichtet. Eine Klemmeinrichtung mit einem Klemmelement, das in einer Führung über einen aufblasbaren Schlauch mittels Pressluft radial verschiebbar sein soll, dient ausschließlich einer Fixierung der Vorrichtung in Längsrichtung der zylindrischen Rohrsegmente und ist mit einer Spanneinrichtung hinsichtlich Funktion und Konstruktion nicht vergleichbar.

Dass weder ein Bedürfnis noch Erfordernis zur Montage und Demontage der Spanneinrichtung vorhanden bzw. überhaupt erkannt ist/war, gilt gleichermaßen für die Vorrichtung nach der US 1 884 144 A, einmal ganz davon abgesehen, dass Einspannung und Ausrichtung von zwei zylindrischen Rohrsegmenten mittels dieser Vorrichtung von außen nach innen erfolgt.

Die GB 835 030 A zeigt eine Schweißvorrichtung zum Einspannen und Ausrichten von segmentartig ausgebildeten, dünnwandigen und hohlprofilierten Bauteilen. Diese Schweißvorrichtung umfasst eine auf oder an einer Basis abgestützte Tragstruktur 14 und eine von der Tragstruktur aufgenommene und gehaltene Einrichtung zum Einspannen von zwei segmentartig ausgebildeten, dünnwandigen und hohlprofilierten Bauteilen, wobei die Spanneinrichtung derart ausgebildet ist, dass die zwei Bauteile im Bereich von deren gemeinsamer Trennebene von der Spanneinrichtung senkrecht zu der Längsachse der Tragstruktur und radial von innen nach außen beaufschlagbar sind, und wenigstens zwei in einer gemeinsamen Ebene angeordnete und radial von innen nach außen, und umgekehrt, verschiebbare Spannelemente mit die zwei Bauteile beaufschlagenden Spannflächen aufweist, wobei die Spanneinrichtung die wenigstens zwei Spannelemente umfasst.

Die US 5 435 479 A offenbart schließlich eine Zylinderrundungs- und -klemmbefestigungsvorrichtung für Schweißverbindungen, die ausschließlich auf mechanischen und elektrischen Bauteilen zusammengesetzt ist. Selbst die Antriebseinrichtung zur Drehung eines Betätigungsringes basiert auf einem elektrischen Motor, der vorzugsweise als Gleichstrommotor ausgestaltet ist.

Der vorliegenden Erfindung liegt daher die Aufgabe zugrunde, eine Vorrichtung zum Einspannen und Ausrichten von segmentartig ausgebildeten, dünnwandigen und hohlprofilierten Bauteilen zur Verfügung zu stellen, welche konstruktiv besonders einfach ausgestaltet, eine leichte wie ebenso schnelle Montage und Demontage einerseits und gleichzeitig eine Erzeugung von hohen Druckkräften ermöglicht und zugleich ausgesprochen vielseitig verwendbar ist, und deren Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung der erfindungsgemäßen Vorrichtung zum Einspannen und Ausrichten von segmentartig ausgebildeten, dünnwandigen und hohlprofilierten Bauteilen, umfassend eine auf oder an einer Basis abgestützte Tragstruktur oder dergleichen Rahmengestell und eine von der Tragstruktur aufgenommene und gehaltene Spanneinrichtung zum Einspannen von zwei segmentartig ausgebildeten, dünnwandigen und hohlprofilierten Bauteilen, wobei die Spanneinrichtung derart ausgebildet ist, dass die zwei Bauteile im Bereich von deren gemeinsamer Trennebene von der Spanneinrichtung senkrecht zu der Längsachse der Tragstruktur und radial von innen nach außen beaufschlagbar sind, wenigstens zwei in einer gemeinsamen Ebene angeordnete und radial von innen nach außen, und umgekehrt, verschiebbare Spannelemente mit die zwei Bauteile beaufschlagenden Spannflächen und mindestens ein die wenigstens zwei Spannelemente gemeinsam beaufschlagendes Spannbetätigungselement, das schlauchförmig oder als ein Schlauch, insbesondere mit einer oder mehreren Kammern, ausgebildet ist und die wenigstens zwei Spannelemente durch Volumenänderung senkrecht zu der Längsachse der Tragstruktur radial von innen nach außen beaufschlagt, eine Vielzahl von aus- und einklappbaren Tragelementen und wenigstens zwei segmentartig ausgebildete und zu einem mehrteiligen Stützring montierbare Stützringelemente zur Abstützung des schlauchförmig oder als ein Schlauch ausgebildeten Spannbetätigungselementes umfasst, wobei die Tragelemente und die Stützringelemente zwischen der Tragstruktur oder einem Stützelement der Tragstruktur und dem mindestens einen Spannbetätigungselement angeordnet sind, wird eine besonders einfache, zudem kompakte und stabile Bauweise der Vorrichtung erreicht. Gleichzeitig eignet sich die erfindungsgemäße Vorrichtung infolge einer durch das die wenigstens zwei Spannelemente gemeinsam beaufschlagende Spannbetätigungselement zu erreichenden Raumaufteilung, Raumausnutzung und damit Platzseinsparung auf besonders vielseitige Weise zur Herstellung von Druckbehältern bzw. Tanks aus Bauteilen von beliebiger Ausgestaltung und Form. Durch die spezielle Ausbildung des Spannbetätigungselementes ist es möglich, zwei Bauteile von beliebiger Form im Bereich von deren gemeinsamer Trennebene senkrecht zu der Längsachse der Tragstruktur und radial von innen nach außen einzuspannen und zueinander auszurichten. So können zwei Bauteile von zum Beispiel im Wesentlichen zylindrischer Form, die von außen frei oder zumindest teilweise frei zugänglich sind, und/oder ebenso Bauteile, die von außen nur über Ausnehmungen oder Durchbrüche in wenigstens einem der zwei Bauteile beschränkt zugänglich sind, von der Spanneinrichtung der erfindungsgemäßen Vorrichtung radial von innen nach außen beaufschlagt werden. Mit der Vorrichtung nach der Erfindung sind somit Bauteile unterschiedlichster Ausgestaltung und Form etwa zu Druckbehältern bzw. Tanks herstellbar, was im Stand der Technik bisher grundsätzlich nur von mehreren verschiedenen Vorrichtungen bewerkstelligt werden konnte, jeweils speziell auf die Ausgestaltung und Form der Bauteile einerseits abgestimmt und von der daraus resultierenden Zugänglichkeit in deren Inneres andererseits abhängig. Selbst komplexe mehrteilige Druckbehälter bzw. Tanks sind mit der erfindungsgemäßen Vorrichtung somit herstellbar. Die erfindungsgemäße Vorrichtung ist somit besonders vielseitig einsetzbar. Dabei lassen sich selbst Druckbehälter mit außerordentlich großen Abmessungen, wie mit einem Durchmesser von bis ca. 6, 0 m oder mehr und einer Länge von bis zu 25 m, mit einer Genauigkeit von bis zu 0,1 mm bei einem Wandstärkenbereich von ca. 2 mm bis etwa 20 mm erhalten. Im Ergebnis lassen sich Behälter, die aus mehreren solcher Bauteile zusammenzusetzen sind, unterschiedlichste geometrische Formen aufweisen, einen in deren Inneres beliebig variierenden und/oder eingeschränkten Zugang besitzen, unterschiedlichsten Fertigungsschritten unterzogen werden, etc., mit der erfindungsgemäßen Vorrichtung weitgehend vollständig, d.h. mittels ein- und derselben Vorrichtung, herstellen. Ein, auch zwischenzeitliches, Einspannen des/der Bauteile/s in/auf anderen Vorrichtungen, die speziell für bestimmte Fertigungsschritte vorgesehen sind, mit dem sich daraus ableitenden Aufwand ist nicht erforderlich.

Wesentliche Vorteile, die sich mit der erfindungsgemäßen Vorrichtung mit einer Spanneinrichtung, welche schlauchförmig oder als ein Schlauch ausgestaltet und somit als quasi Schlauchspanneinrichtung ausgebildet ist, erhalten lassen, sind weiter: Die Spanneinrichtung ist ausgesprochen einfach zerlegbar und somit selbst im Inneren von einem Behälter oder einem oder mehreren Bauteil/en, die von außen nur über Ausnehmungen oder Durchbrüche in wenigstens einem der zwei Bauteile beschränkt zugänglich sind, montiert bzw. anschließend wieder demontiert werden zu können. Druckbehälter mit einem Durchmesser von etwa 5,0 m und einem Umfang von ca. 18,0 m weisen beispielsweise lediglich Ausnehmungen oder Öffnungen kleiner oder gleich 1 m auf, durch welche die Spanneinrichtung nach der Bearbeitung der Bauteile bzw. des Behälters hindurchgeführt und herausbewegt werden müssen. Mit der erfindungsgemäßen Spanneinrichtung lassen sich radiale Kräfte und/oder Momente von zum Teil bis 10 t und mehr, die bei einer Bearbeitung des/der Bauteile/s, zum Beispiel beim Rührreib (FSW)-Schweißen, auftreten, über deren gesamten Umfang gleichmäßig und/oder gleichbleibend verteilen. Mit der Spanneinrichtung ist eine stufenlose Verfahrbarkeit ermöglicht. Es lassen sich mit der Spanneinrichtung auf kleinem Raum und/oder mit schon geringfügiger Verschiebung extrem hohe Kräfte auf die Bauteile ausüben. Mit der erfindungsgemäßen Spanneinrichtung lassen sich darüber hinaus radiale Kräfte und/oder Momente von zum Teil bis 100 t und mehr, die bei einer Bearbeitung des/der Bauteile/s, zum Beispiel beim Wolfram-Inertgas (WIG)-Schweißen, auftreten, erzeugen, um eine homogene Aufweitung des/der Bauteile/s zu ermöglichen. Eine solche Aufweitung kann gewünscht oder sogar notwendig sein, um beispielsweise einen bei der Bearbeitung des/der Bauteile/s, etwa beim Wolfram-Inertgas (WIG)-Schweißen, auftretenden Schrumpf auszugleichen, um die Abmessungen des/der Bauteile/s vor und nach der Bearbeitung konstant zu halten. Schließlich ist die Spanneinrichtung besonders vielseitig einsetzbar. So kann die Spanneinrichtung zusammen mit unterschiedlichsten Einrichtungen zur Bearbeitung des/der Bauteile/s verwendet werden. Die Spanneinrichtung kann in besonders vorteilhafter Weise zum Einsatz gebracht werden, wenn das/die Bauteil/e zum Beispiel geschweißt bzw. miteinander verschweißt werden sollen, und zwar gänzlich unabhängig von dem jeweiligen Schweißverfahren. Die Spanneinrichtung kann daher gleichermaßen mit einer Rührreib (FSW)-Schweißeinrichtung oder einer Wolfram-Inertgas (WIG)-Schweißeinrichtung bzw. jeder sonstigen Schweißeinrichtung eingesetzt werden.

Von besonderem Interesse sind die Maßnahmen, wonach die Spanneinrichtung wenigstens zwei segmentartig ausgebildete Stützringelemente, die zwischen der Tragstruktur oder dem Stützelement der Tragstruktur und dem mindestens einen Spannbetätigungselement angeordnet sind, umfasst. Die Anzahl der Stützringelemente ist grundsätzlich beliebig. In der Praxis wird sich die Anzahl der Stützringelemente - wie eben diejenige der wenigstens zwei Spannelemente - jedoch nach dem Gewicht eines einzigen Stützringelementes, das vom Personal noch zu handhaben, sprich zu heben und zu tragen ist, nach dem Durchmesser der Bauteile selbst, der Größe und Zugänglichkeit der Ausnehmungen und Öffnungen etc. bestimmen. Zum einen ist durch die Mehrteiligkeit des Stützringes eine Demontage der Spanneinrichtung nach erfolgter Bearbeitung und/oder Verschweißung der zwei Bauteile miteinander zu einem Behälter und eine anschließende Herausbewegung der wenigstens zwei segmentartig ausgebildeten Stützringelemente durch sehr viel kleinere Ausnehmungen oder Öffnungen in dem Behälter sichergestellt. Zum anderen ist durch den Stützring ermöglicht, erheblichen Druckbelastungen, die beispielsweise beim Rührreib (FSW)-Schweißen auftreten, ohne weiteres standzuhalten und/oder erheblichen Schrumpfbelastungen, die beispielsweise beim Wolfram-Inertgas (WIG)-Schweißen auftreten, entgegenzuwirken bzw. große Druck- und Expansionskräfte aufzubringen, um das/die Bauteile/s homogen aufzuweiten und dessen/deren Abmessungen vor und nach der Verschweißung konstant zu halten. Und dies über den gesamten Umfang des Stützringes gleichmäßig und/oder gleichbleibend verteilt, ohne Beanspruchung von Tragstruktur oder Stützelement der Tragstruktur.

Von besonderer Bedeutung für eine ausgesprochen vielseitige Verwendungsmöglichkeit der Vorrichtung nach der Erfindung sind die Merkmale, wonach die Spanneinrichtung eine Vielzahl von aus- und einklappbaren Tragelementen, die zwischen der Tragstruktur oder dem Stützelement der Tragstruktur und dem mindestens einen Spannbetätigungselement angeordnet sind, umfasst. Auf diese Weise ist ein Einspannen und Ausrichten von zwei Bauteilen mit beliebiger Form im Bereich von deren gemeinsamer Trennebene ermöglicht. So können zwei Bauteile von zum Beispiel im Wesentlichen zylindrischer Form, die teilweise geschlossen, d.h. von außen allenfalls über Ausnehmungen oder Durchbrüche in wenigstens einem der zwei Bauteile beschränkt zugänglich sind, gespannt und ausgerichtet werden. Durch die erfindungsgemäße Ausbildung, die Tragelemente aus- und einklappen zu können, ist eine Einbringung der erfindungsgemäßen Spanneinrichtung in zwei Bauteile von teilweise oder vollständig geschlossener Form oder sogar in einen Behälter, etwa über Ausnehmungen oder Öffnungen, wie Pole oder dergleichen, und eine Positionierung dessen im Inneren der Bauteile oder des Behälters ebenso wie eine anschließende Herausbewegung aus den zwei Bauteilen bzw. dem Behälter nach deren erfolgter Bearbeitung ermöglicht. Selbst komplexe mehrteilige Druckbehälter bzw. Tanks lassen sich daher mit der erfindungsgemäßen Vorrichtung herstellen.

Vorteilhafte konstruktive Einzelheiten der erfindungsgemäßen Vorrichtung sind in den Ansprüchen 2 bis 17 beschrieben.

Nach Anspruch 2 ist entsprechend der Erfindung vorgesehen, dass das mindestens eine Spannbetätigungselement der Spanneinrichtung eine der Längsachse der Tragstruktur zugewandte Druckfläche umfasst, die mit einer der Längsachse der Tragstruktur abgewandten, entsprechend ausgebildeten Druckfläche der Tragstruktur oder des Stützelementes der Tragstruktur in Eingriff steht, über die das mindestens eine Spannbetätigungselement an der Tragstruktur oder dem Stützelement der Tragstruktur radial nach innen abstützbar ist.

Entsprechend den Merkmalen des Anspruchs 3 umfasst das mindestens eine Spannbetätigungselement der Spanneinrichtung in vorteilhafter Weise eine der Längsachse der Tragstruktur abgewandte Druckfläche, die mit der Längsachse der Tragstruktur zugewandten, entsprechend ausgebildeten Druckflächen der wenigstens zwei Spannelemente in Eingriff steht, derart, dass die wenigstens zwei Spannelemente durch Volumenänderung des mindestens einen Spannbetätigungselementes im Wesentlichen senkrecht oder im Wesentlichen senkrecht zu der Längsachse der Tragstruktur radial von innen nach außen, und umgekehrt, verschiebbar sind.

Weiterhin liegt es im Rahmen der Erfindung, dass die Spanneinrichtung nach Anspruch 4 eine pneumatische oder hydraulische Antriebseinrichtung zur Volumenänderung des mindestens einen Spannbetätigungselementes senkrecht oder im Wesentlichen senkrecht zu der Längsachse der Tragstruktur und damit zur Verschiebung der wenigstens zwei Spannelemente umfasst.

Darüber hinaus ist das mindestens eine Spannbetätigungselement der Spanneinrichtung nach Anspruch 5 an der Tragstruktur oder einem Stützelement der Tragstruktur radial nach innen abstützbar.

Erfindungsgemäß ist vorgesehen, dass die wenigstens zwei segmentartig ausgebildeten Stützringelemente nach Anspruch 6 zu einem mehrteiligen Stützring mit einer die der Längsachse der Tragstruktur abgewandten Druckfläche bildenden Umfangsfläche montierbar sind.

In diesem Zusammenhang ist es alternativ oder kumulativ dazu, insbesondere, von Vorteil, das mindestens eine Spannbetätigungselement der Spanneinrichtung über die wenigstens zwei segmentartig ausgebildeten Stützringelemente, die an Enden der aus- und einklappbaren Tragelemente montierbar sind, radial nach innen abstützbar auszugestalten.

Des Weiteren umfasst die Spanneinrichtung nach Anspruch 7 erfindungsgemäß ein/e/n Führungsbuchse, -ring oder dergleichen -element, die/der/das von der Tragstruktur oder dem Stützelement der Tragstruktur axial verschiebbar aufgenommen ist und an der/dem die aus- und einklappbaren Tragelemente angelenkt sind.

Zweckmäßig ist es weiter, die Spanneinrichtung nach Anspruch 8 mit einer Antriebseinrichtung zur axialen Verschiebung der/des Führungsbuchse, -ringes oder dergleichen -elementes zu versehen.

Entsprechend Anspruch 9 umfasst die Antriebseinrichtung der Spanneinrichtung bevorzugt wenigstens eine manuell, elektromotorisch, mechanisch, pneumatisch oder hydraulisch angetriebene und synchronisierte Linearachse oder Kolben zur Verschiebung der/des Führungsbuchse, -ringes oder dergleichen -elementes.

Nach Anspruch 10 ist erfindungsgemäß vorgesehen, die aus- und einklappbaren Tragelemente teleskopartig auszubilden.

Vorzugsweise umfasst die Spanneinrichtung entsprechend Anspruch 11 Führungselemente, insbesondere Bolzen, über welche die wenigstens zwei Spannelemente von den wenigstens zwei segmentartig ausgebildeten Stützringelementen aufgenommen und radial verschieblich geführt sind.

Dabei sind die Führungselemente eines Spannelementes erfindungsgemäß jeweils zueinander sich im Wesentlichen parallel erstreckend angeordnet.

Darüber hinaus nehmen die Führungselemente die Spannelemente nach Anspruch 12 bevorzugt über Buchsen, die wenigstens teilweise oder vollständig aus elastischem Material, insbesondere aus Gummi, gebildet sind, auf, um einer Schwergängigkeit bzw. sogar Verklemmung der wenigstens zwei Spannelemente bei deren radialer Verschiebung entgegenzuwirken.

Von zusätzlichem Vorteil sind die Merkmale des Anspruchs 13. Demnach umfasst die Spanneinrichtung Anschlagelemente, insbesondere Bolzen. Die Anschlagelemente sind zwischen den wenigstens zwei Spannelementen und den wenigstens zwei segmentartig ausgebildeten Stützringelementen angeordnet und zur Begrenzung der Verschiebbarkeit der wenigstens zwei Spannelemente radial nach außen vorgesehen.

Zur Vermeidung einer Schwergängigkeit bzw. sogar Verklemmung der wenigstens zwei Spannelemente bei deren radialer Verschiebung sind die Anschlagelemente nach Anspruch 14 von den Spannelementen gelenkig aufgenommen.

Alternativ oder kumulativ dazu, insbesondere, sind die Anschlagelemente in den Spannelementen über (Kugel- oder Kardan-)Gelenke gelagert.

Um auszuschließen, dass die Bauteile und/oder der Behälter bei der Bearbeitung aufgrund eines unvorhergesehenen Defektes des wenigstens einen schlauchförmigen Spannbetätigungselementes beschädigt werden können, sehen die Merkmale des Anspruchs 15 vor, die Spanneinrichtung zusätzlich mit Verriegelungselementen auszustatten. Die Verriegelungselemente sind jeweils einem Anschlagelement zur Ver- und Entriegelung des jeweiligen Anschlagelementes und zur zeitweisen Festlegung der wenigstens zwei Spannelemente im maximalen Spannzustand zugeordnet.

Zur Vereinfachung der Handhabung und merklichen Zeiteinsparung bei der Montage und Demontage der gesamten Spanneinrichtung sind die Führungselemente und/oder Anschlagelemente und/oder Verriegelungselemente alternativ oder kumulativ dazu, insbesondere, mit Dreh-, Schraub- oder dergleichen Betätigungsknöpfen oder -griffen versehen.

Entsprechend Anspruch 16 sind die wenigstens zwei Spannelemente der Spanneinrichtung jeweils als eine Spannbacke ausgebildet. Die Anzahl von vorzusehenden Spannelementen bzw. Spannbacken richtet sich nach den individuellen technischen Anforderungen an die zwei Bauteile, deren Dimensionen und/oder Material, die jeweiligen Bearbeitungsverfahren und -abläufe etc. So kann die erfindungsgemäße Vorrichtung zum Beispiel mit nur zwei oder ebenso mit 16, 32 und mehr Spannelementen bzw. Spannbacken ausgestattet sein.

Vorteilhafterweise ist der Spanneinrichtung nach Anspruch 17 wenigstens eine Einrichtung zur Bearbeitung mindestens eines Teils der zwei segmentartig ausgebildeten, dünnwandigen und hohlprofilierten Bauteile zugeordnet.

Dabei liegt es bevorzugt im Rahmen der Erfindung, die wenigstens eine Einrichtung zur Bearbeitung des mindestens einen Teils der zwei segmentartig ausgebildeten, dünnwandigen und hohlprofilierten Bauteile nach Anspruch 18 als Schweiß-, Löt- oder Klebeeinrichtung, Schneideeinrichtung, Schleif-, Fräs-, Dreh- oder dergleichen flächen- und spanbearbeitende sowie güte- und materialprüfende Einrichtung auszubilden. Die Schweißeinrichtung kann auf Wolfram-Inertgas (WIG)-, Metall-Inertgas (MIG)-, Rührreib (FSW)-, Elektronenstrahl (EB)-, Laser-, Plasmaschweißen oder jedem anderen geeigneten Schweißverfahren basieren. Ganz bevorzugt für die erfindungsgemäße Vorrichtung eignet sich eine Schweißeinrichtung auf Basis von Rührreib (FSW)-Schweißen und/oder Wolfram-Inertgas (WIG)-Schweißen.

Schließlich sorgen die Merkmale nach Anspruch 19 für eine Erhöhung der Genauigkeit beim Einspannen und Ausrichten der zwei Bauteile zueinander und damit einer Verbesserung der Herstellungsgenauigkeit insgesamt. Demnach ist erfindungsgemäß noch vorgesehen, dass die Spanneinrichtung an der Tragstruktur gegenüber der wenigstens einen Einrichtung zur Bearbeitung der zwei segmentartig ausgebildeten, dünnwandigen und hohlprofilierten Bauteile relativ drehbar, insbesondere um die Längsachse der Tragstruktur, und/oder verschwenkbar, insbesondere um eine horizontale Drehachse, angeordnet ist. Insbesondere die relative Verschwenkbarkeit ermöglicht es, jede Schweißnaht in der jeweils optimalen Lage erzeugen, indem die flüssige Schweißschmelze in optimale/r Lage, nämlich in sogenannte/r Wannenlage zur Erdanziehung, ausgerichtet und erzeugt wird.

Diese Aufgabe wird schließlich noch in verwendungsmäßiger Hinsicht durch die Merkmale der Ansprüche 20 bis 23 gelöst.

Demnach ist die erfindungsgemäße Vorrichtung vorzugsweise zum Einspannen, insbesondere in Umfangsrichtung spannungsfreien Einspannen, zur Montage von segmentartig ausgebildeten, dünnwandigen und hohlzylindrischen Bauteilen und Behältern, Domen sowie Boostergehäusen von Raketen oder ähnlichen hohlzylindrischen Geräten großer Abmessungen vorgesehen. Alternativ oder kumulativ dazu kann die erfindungsgemäße Vorrichtung dem Bearbeiten, insbesondere dem Verschweißen, Verlöten oder Verkleben bzw. Schneiden bzw. Schleifen, Fräsen, Drehen oder dergleichen Flächenbearbeitung, von segmentartig ausgebildeten, dünnwandigen und hohlzylindrischen Bauteilen und Behältern, Domen sowie Boostergehäusen oder ähnlichen hohlzylindrischen Geräten großer Abmessungen dienen.

Alternativ oder kumulativ dazu, insbesondere, liegt es noch im Rahmen der Erfindung, die erfindungsgemäße Vorrichtung zum Herstellen von rotationssymmetrischen und/oder nicht rotationssymmetrischen schalenförmigen, insbesondere halbkugelförmig, kugelkappenförmig, kalottenförmig, ellipsoidkallotenförmig, konisch, elliptisch, in Cassini-Form, Halb-Torus-förmig oder mit dergleichen anderen Querschnittsformen ausgestalteten Bauteilen zu verwenden. Ganz besonders eignet sich die erfindungsgemäße Vorrichtung dabei zum Herstellen von Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

Weitere Vorteile und Einzelheiten der Erfindung ergeben sich aus der nachfolgenden Beschreibung von bevorzugten Ausführungsformen der Erfindung sowie anhand der Zeichnungen. Hierbei zeigen:
- Fig. 1: eine schematische Seitenansicht eines aus segmentartig ausgebildeten, dünnwandigen und hohlprofilierten Bauteilen gefertigten Treibstofftanks,
- Fig. 1A: eine teilweise abgebrochene, schematische Schnittansicht durch den Treibstofftank entsprechend Ausschnitt IA in der Fig. 1, in vergrößerter Darstellung,
- Fig. 2: eine Vorderansicht einer Ausführungsform einer erfindungsgemäß ausgebildeten Vorrichtung zum Einspannen und Ausrichten von segmentartig ausgebildeten, dünnwandigen und hohlprofilierten Bauteilen zusammen mit zwei Ausführungsformen einer Einrichtung zur Bearbeitung von zwei Bauteilen,
- Fig. 3: eine Draufsicht auf die Ausführungsform der erfindungsgemäßen Spanneinrichtung nach der Fig. 2, im Spannzustand, in vergrößerter Darstellung,
- Fig. 4: eine teilweise abgebrochene Draufsicht auf die Ausführungsform der erfindungsgemäßen Spanneinrichtung nach der Fig. 2 entsprechend Ausschnitt IV in der Fig. 3, in nochmals vergrößerter Darstellung,
- Fig. 5A und 5B: Schnittansichten durch die Ausführungsform der erfindungsgemäßen Spanneinrichtung entsprechend Linie V-V in der Fig. 4, im ungespannten Zustand und im Spannzustand,
- Fig. 6A und 6B: Schnittansichten durch die Ausführungsform der erfindungsgemäßen Spanneinrichtung entsprechend Linie VI-VI in der Fig. 4, im ungespannten Zustand und im Spannzustand, und
- Fig. 7A und 7B: Schnittansichten durch die Ausführungsform der erfindungsgemäßen Spanneinrichtung entsprechend Linie VII-VII in der Fig. 4, im entriegelten und verriegelten Zustand bzw. Spannzustand.

Bei der nachfolgenden Beschreibung von Ausführungsbeispielen der erfindungsgemäßen Vorrichtung 10 zum Einspannen und Ausrichten von segmentartig ausgebildeten, dünnwandigen und hohlprofilierten Bauteilen 12 sind einander entsprechende, gleiche Bauteile jeweils mit identischen Bezugsziffern versehen.

Die Vorrichtung 10 nach der Erfindung ist zum Einspannen und Ausrichten von segmentartig ausgebildeten, dünnwandigen und hohlzylindrischen Bauteilen und Behältern, Domen sowie Boostergehäusen von Raketen oder ähnlichen hohlzylindrischen Geräten großer Abmessungen vorgesehen. Die Vorrichtung 10 zeichnet sich besonders durch ein in Umfangsrichtung spannungsfreies Einspannen aus, da die Spannung am bzw. über den Umfang im Bereich der gemeinsamen Trennebene von den Bauteilen gleich ist.

Die erfindungsgemäße Vorrichtung 10 eignet sich insbesondere zum Bearbeiten, insbesondere zum Verschweißen, Verlöten oder Verkleben bzw. Schneiden bzw. Schleifen, Fräsen, Drehen oder dergleichen Flächenbearbeitung, von segmentartig ausgebildeten, dünnwandigen und hohlzylindrischen Bauteilen und Behältern, Domen sowie Boostergehäusen oder ähnlichen hohlzylindrischen Geräten großer Abmessungen.

Darüber hinaus findet die erfindungsgemäße Vorrichtung 10 vorzugsweise zum Herstellen von rotationssymmetrischen und/oder nicht rotationssymmetrischen schalenförmigen, insbesondere halbkugelförmig, kugelkappenförmig, kalottenförmig, ellipsoidkallotenförmig, konisch, elliptisch, in Cassini-Form, Halb-Torus-förmig oder mit dergleichen anderen Querschnittsformen ausgestalteten Bauteilen Verwendung.

In ganz bevorzugter Weise dient die erfindungsgemäße Vorrichtung 10 dem Herstellen von Bauteilen 12, wie etwa Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

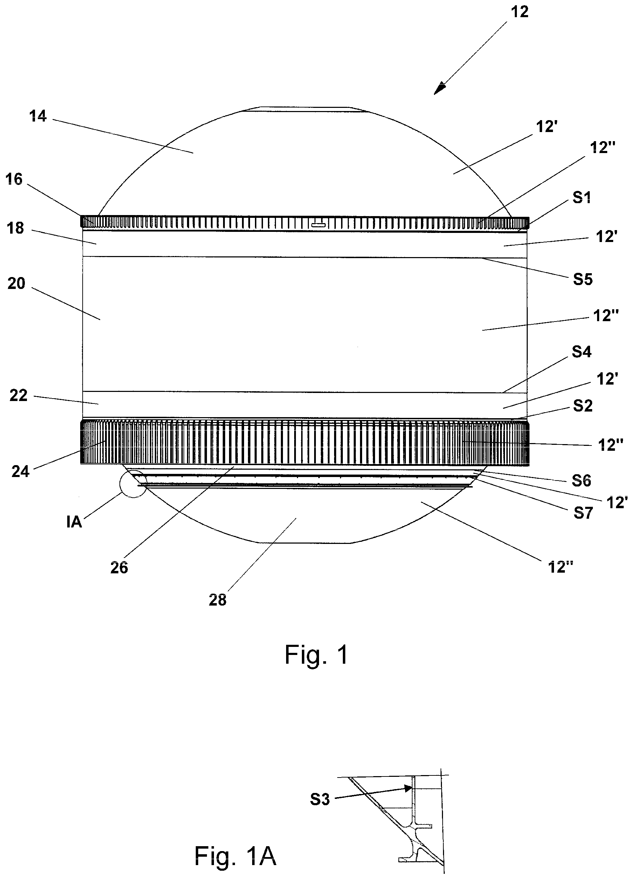

Ein solcher fertig hergestellter Behälter 12 ist in der Fig. 1 beispielhaft als ein Treibstofftank der Oberstufe der Ariane 5 dargestellt. Der Treibstofftank 12 ist aus einer Vielzahl von segmentartig ausgebildeten, dünnwandigen und hohlprofilierten Bauteilen 12', 12'' zusammengesetzt, die sich in Form und Abmessung voneinander erheblich unterscheiden. Die Bauteile 12', 12'' sind jeweils zueinander benachbart. Entsprechend der Fig. 1 ist der Treibstofftank aus einem Upper Bulkhead 14, einem Upper Skirt 16, einem Upper Y-Ring 18, einem Hohlzylinder 20, einem Lower Y-Ring 22, einem Elongated Lower Skirt 24, einem Inner Dome (nicht zu sehen) inklusive X-Ring 26 und einem LOX Dome bzw. Lower Bulkhead 28 gebildet. Die einzelnen einander benachbarten Bauteile 12', 12'' sind jeweils miteinander zu verschweißen. Dabei bilden die entsprechenden Schweißnähte S1, S2, S3, S4, S5, S6, S7 Verbindungsstellen zwischen jeweils zwei einander benachbarten Bauteilen 12', 12''. Einige dieser Schweißnähte können einfach, schnell und präzisionsgenau mittels der erfindungsgemäßen Vorrichtung 10 erzeugt werden.

Dies trifft zum Beispiel auf die Schweißnähte S3 oder S5 entsprechend den Fig. 1 und 1A zu, um den Inner Dome 26 mit dem LOX Dome 28 bzw. das Upper Tank Compartment aus Upper Bulkhead 14/Upper Skirt 16 mit dem Lower Tank Compartment und den Hohlzylinder 20 miteinander zu verschweißen. Das Innere ist im Fall der Schweißnähte S3 oder S5 aufgrund des/der teilweise geschlossenen Behälters 12 bzw. Bauteile 12', 12'' nach der Bearbeitung bzw. Verschweißung nur mehr über kleine Ausnehmungen oder Öffnungen zugänglich, über welche die erfindungsgemäße Vorrichtung 10 herausbewegt werden muss.

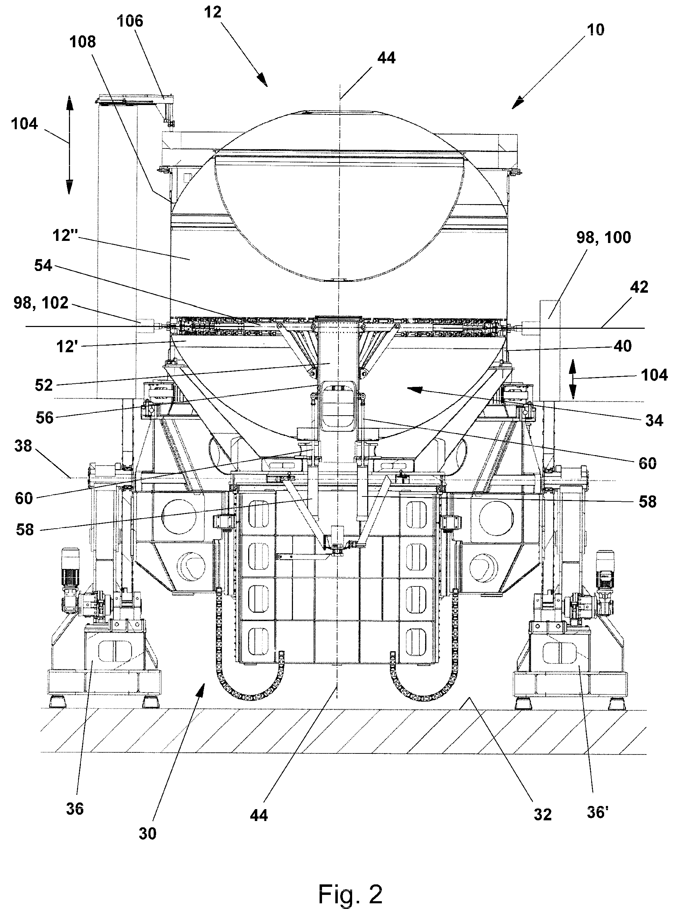

In den Fig. 2 bis 7B ist eine Ausführungsform der erfindungsgemäßen Vorrichtung 10 zum Einspannen und Ausrichten der segmentartig ausgebildeten, dünnwandigen und hohlprofilierten Bauteile 12', 12'' gezeigt.

Die erfindungsgemäße Vorrichtung 10 umfasst eine Tragstruktur 30 oder dergleichen Rahmengestell bzw. quasi Maschinentisch. Die Tragstruktur 30 ist auf oder an einer Basis 32 abgestützt. Bei der Basis 32 handelt es sich um ein Fundament, einen (Fundament-)Boden eines Gebäudes oder eine sonstige Grundkonsole.

Des Weiteren umfasst die erfindungsgemäße Vorrichtung 10 eine Einrichtung 34 zum Einspannen des Behälters 12 und/oder der zwei segmentartig ausgebildeten, dünnwandigen und hohlprofilierten Bauteile 12', 12''. Die Spanneinrichtung 34 ist von der Tragstruktur 30, wie aus der Fig. 2 ersichtlich ist, aufgenommen und gehalten.

Die Tragstruktur 30 umfasst, wie die Fig. 2 zeigt, zwei Tragelemente 36, 36'. Die zwei Tragelemente 36, 36' stützen sich auf oder an der Basis 32 oder dergleichen Fundament ab und sind auf bzw. an der Basis 32 einander gegenüberliegend, zum Beispiel mittels Schrauben etc. (nicht dargestellt), in herkömmlicher Weise befestigbar. Entsprechend der Fig. 2 ist die Spanneinrichtung 34 von der Tragstruktur 30 zwischen deren zwei Tragelementen 36, 36' mittig aufgenommen und, vorzugsweise dreh- bzw. verschwenkbar, zum Beispiel über eine im Wesentlichen horizontal verlaufende Drehachse 38, gehalten.

Die Spanneinrichtung 34 weist, wie der Fig. 2 entnehmbar ist, einen Tisch 40 oder Sockel, auf dem die zwei Bauteile 12', 12'' gegebenenfalls unter Zwischenanordnung eines Adapterelementes zu deren Höheneinstellung zu positionieren sind, und eine Vielzahl von Zentrierelementen und Klammerelementen (nicht gezeigt) auf. Mittels der Zentrierelemente und der Klammerelemente werden die zwei auf dem Tisch oder Sockel positionierten Bauteile 12', 12'' sodann ausgerichtet und lösbar festgelegt bzw. gehalten.

Weiter ist die Spanneinrichtung 34 derart ausgebildet, dass die zwei Bauteile 12', 12'' im Bereich von deren gemeinsamer Trennebene 42 von der Spanneinrichtung 34 senkrecht oder im Wesentlichen senkrecht zu der Längsachse 44 der Tragstruktur 30, die gleichzeitig die Längsachse der Vorrichtung 10 ist, und radial von innen nach außen beaufschlagbar sind. Darüber hinaus weist die Spanneinrichtung 34 wenigstens zwei Spannelemente 46 mit Spannflächen 48, welche die zwei Bauteile 12', 12'' beaufschlagen, auf. Die wenigstens zwei Spannelemente 46 sind in einer gemeinsamen Ebene angeordnet und radial von innen nach außen, und umgekehrt, verschiebbar.

Eine Ausführungsform der erfindungsgemäßen Vorrichtung 10 ist anhand der Fig. 2 bis 7B näher erläutert. Der Spanneinrichtung 34 sind die wenigstens zwei Spannelemente 46 zugeordnet. Die wenigstens zwei Spannelemente 46 der Spanneinrichtung 34 sind vorzugsweise als einzelne Spannbacken ausgebildet.

Die Anzahl der Spannelemente 46 bzw. Spannbacken richtet sich nach den individuellen technischen Anforderungen an die zwei Bauteile 12', 12'', deren Abmessungen und/oder Material, die jeweiligen Bearbeitungsverfahren und -abläufe etc. So kann die erfindungsgemäße Vorrichtung 10 zum Beispiel mit nur zwei Spannelementen 46 bzw. Spannbacken ausgestattet sein. Bei der Ausführungsform der Vorrichtung 10, die in den Fig. 2 bis 7B gezeigt ist, sind hingegen insgesamt 16 Spannelemente 46 bzw. Spannbacken vorgesehen. Ohne im Einzelnen dargestellt oder beschrieben zu sein, kann die Anzahl der Spannelemente 46 allerdings ebenso kleiner wie größer sein. Bei einer anderen Ausführungsform wiederum sind 32 Spannelemente 46 (nicht gezeigt) vorgesehen.

Die Spanneinrichtung 34 umfasst zudem mindestens ein Spannbetätigungselement 50, das die wenigstens zwei Spannelemente 46 gemeinsam beaufschlagt bzw. auf die Spannelemente 46 gleichzeitig und in gleichem Ausmaß einwirkt, d.h. die Spannelemente 46 sämtlich radial nach außen in Richtung der zwei Bauteile 12', 12'' verschiebt bzw. drückt oder sämtlich radial nach innen in Richtung der Längsachse 40 der Tragstruktur 30 bzw. der Vorrichtung 10 und damit von den Bauteilen 12', 12'' weg zurückzieht.

Das mindestens eine Spannbetätigungselement 50 der Spanneinrichtung 34 ist ring- oder kreisringförmig ausgebildet. Das mindestens eine Spannbetätigungselement 50 ist schlauchförmig bzw. als Schlauch ausgestaltet. Das mindestens eine Spannbetätigungselement 50 kann dabei aus einer oder mehreren Kammern, die miteinander kommunizieren, bestehen. Das mindestens eine Spannbetätigungselement 50 ist derart ausgestaltet, dass die Spannelemente 46 durch Volumenänderung senkrecht zu der Längsachse 40 der Tragstruktur 30 radial von innen nach außen beaufschlagt werden.

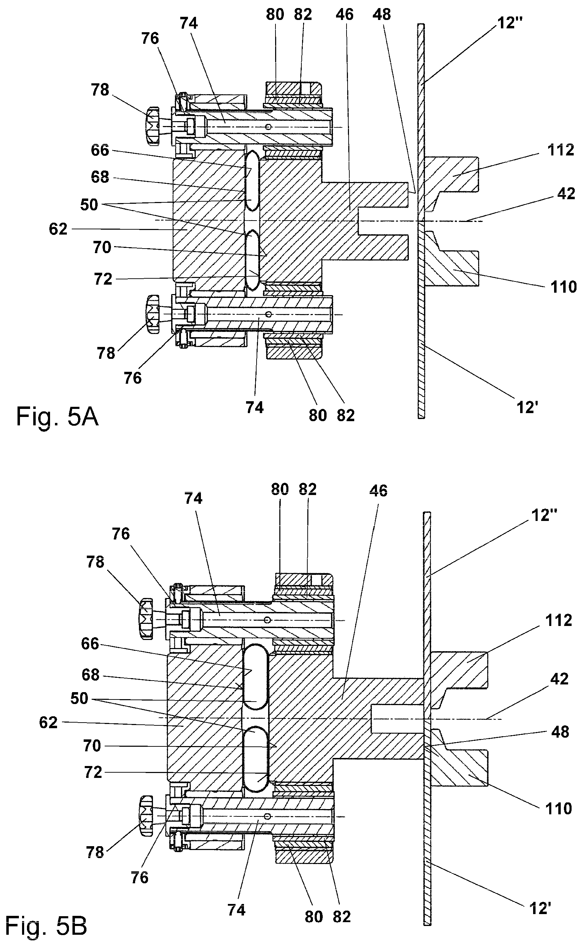

Bei der in den Fig. 2 bis 7B dargestellten Ausführungsform der erfindungsgemäßen Vorrichtung 10 sind insgesamt zwei Spannbetätigungselemente 50 vorgesehen. Wie sich insbesondere den Fig. 5A bis 6B entnehmen lässt, sind die zwei Spannbetätigungselemente 50 übereinander angeordnet.

Die Spanneinrichtung 34 umfasst eine pneumatische oder hydraulische Antriebseinrichtung (nicht dargestellt) zur Änderung des Volumens in dem mindestens einen Spannbestätigungselement 50 und folglich zur Volumenänderung der wenigsten zwei, hier 16, Spannelemente 46 senkrecht oder im Wesentlichen senkrecht zu der Längsachse 40 der Tragstruktur 30. Die Antriebseinrichtung fördert ein Druckmedium pneumatisch oder hydraulisch in die zwei als Schlauch ausgebildete Spannbetätigungselemente 50, die sich entsprechend ausdehnen oder zusammenziehen.

Die zwei Spannbetätigungselemente 50 der Spanneinrichtung 34 sind an der Tragstruktur 30 radial nach innen abstützbar. Bei der in der Fig. 2 dargestellten Ausführungsform der erfindungsgemäßen Vorrichtung 10 ist ein Stützelement 52 vorgesehen. Das Stützelement 52 ist länglich und rohrförmig ausgebildet und mittig auf der Längsachse 40 der Tragstruktur 30 angeordnet. Mithin erfolgt die Abstützung der zwei Spannbestätigungselemente 50 radial nach innen über das Stützelement 52 der Tragstruktur 30.

Das Stützelement 52 ist dabei vorzugsweise an der Tragstruktur 30 befestigt, d.h. mit der Tragstruktur 30 feststehend verbunden. Alternativ oder kumulativ dazu kann es, ohne im Einzelnen dargestellt zu sein, jedoch ebenso möglich und gleichermaßen von Vorteil sein, das Stützelement 50 auf oder parallel zu der Längsachse 40 der Tragstruktur 30 mittels einer gesonderten Antriebseinrichtung (ebenfalls nicht gezeigt) verschiebbar anzuordnen.

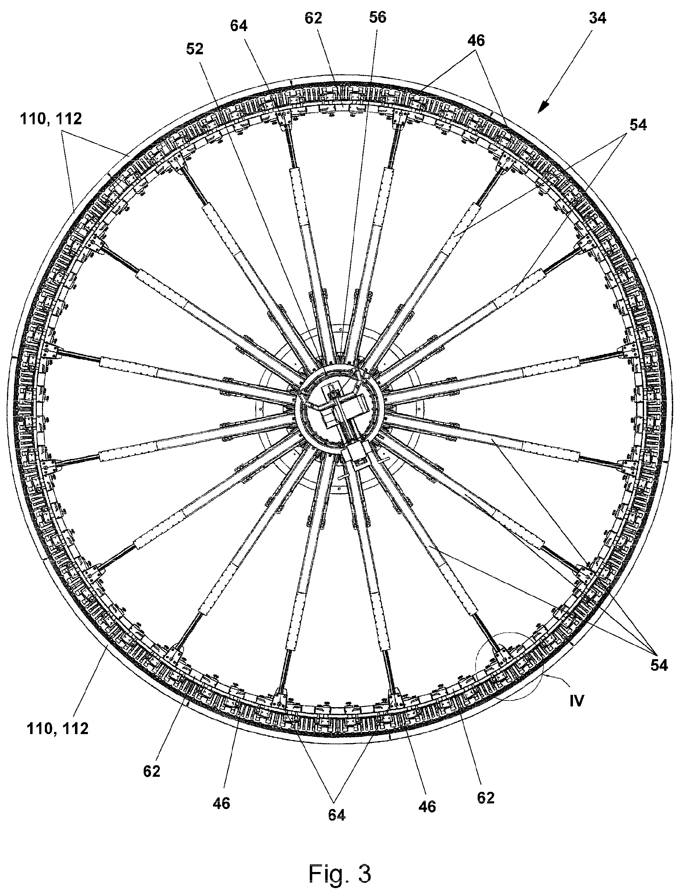

Wie die Fig. 2 und 3 weiter zeigen, umfasst die Spanneinrichtung 34 eine Vielzahl von aus- und einklappbaren Tragelementen 54 oder Tragarmen, die zwischen der Tragstruktur 30 bzw. dem Stützelement 52 der Tragstruktur 30 und den zwei Spannbetätigungselementen 50 angeordnet sind. Die Tragelemente 54 sind aus- und einklappbar ausgebildet, um das Stützelement 52 zusammen mit dem mindestens einen Spannbetätigungselement 50 in zwei Bauteile 12', 12'' von teilweise oder vollständig geschlossener Form oder sogar in einen Behälter 12 über Ausnehmungen oder Öffnungen, wie zum Beispiel Polöffnungen, einbringen und nach der Bearbeitung durch dieselben Ausnehmungen oder Öffnungen wieder herausführen zu können.

Zum Aus- und Einklappen der Tragelemente 54 weist die Spanneinrichtung 34 eine Führungsbuchse 56, einen Führungsring oder dergleichen Führungselement auf. Die Führungsbuchse 56 ist von der Tragstruktur 30 oder dem Stützelement 52 der Tragstruktur 30 axial verschiebbar aufgenommen. Die aus- und einklappbaren Tragelemente 54 sind an der Führungsbuchse 56 angelenkt. Die Tragarme 54 werden bei axialer Verschiebung der Führungsbuchse 56 nach oben ausgeklappt und nach unten eingeklappt.

Um die Führungsbuchse 56 entlang des Stützelementes 52 axial zu verschieben, umfasst die Spanneinrichtung 34 eine Antriebseinrichtung 58, die zwischen der Führungsbuchse 56 und dem Stützelement 52 der Tragstruktur 30 angeordnet ist und wirkt. Die Antriebseinrichtung 58, die zum Beispiel in Form von Druckzylindern ausgestaltet sein kann, weist dabei wenigstens eine manuell, elektromotorisch, mechanisch, pneumatisch oder hydraulisch angetriebene und synchronisierte Linearachse 60 oder Kolben auf.

Weiterhin sind die aus- und einklappbaren Tragelemente 54 teleskopartig ausgebildet und damit in ihrer Länge veränderbar.

Den Fig. 2 und 3 ist ebenfalls entnehmbar, dass die Spanneinrichtung 34 wenigstens zwei segmentartig ausgebildete Stützringelemente 62 umfasst. Die Stützringelemente 62 sind zwischen der Tragstruktur 30 oder dem Stützelement 52 und den zwei Spannbetätigungselementen 50 angeordnet. Bei dem vorliegenden Ausführungsbeispiel ist jedem Tragelement 54 dabei ein segmentartig ausgebildetes Stützringelement 62 zugeordnet. Somit sind 16 Stützringelemente 62 vorgesehen. Insbesondere sind die segmentartigen Stützringelemente 62 an den Enden 64 der jeweils zugeordneten Tragelemente 54 angebracht oder jedenfalls anbringbar.

Die segmentartig ausgebildeten Stützringelemente 62 sind zu einem mehrteiligen Stützring montierbar. Zu diesem Zweck sind die Tragelemente 54 mit deren Enden 64 in eine Stellung zu bewegen, in welcher die segmentartigen Stützringelemente 62 mit ihren jeweils benachbarten Stützringelementen 62 in gegenseitigen Kontakt gelangen und sich dann aneinander abstützen. Aufgrund der Druckverhältnisse hat es sich in der Praxis grundsätzlich als ausreichend erwiesen, die jeweils links- und rechtsseitig benachbarten Stützringelemente 62 ohne gesonderte Verbindungselemente, wie Schrauben oder dergleichen, zueinander festzulegen. Die jeweils benachbarten Stützringelemente 62 stützen sich über deren zugeordneten Seiten bzw. Flanken einander ab. Gleichwohl ist es ohne weiteres möglich, die Stützringelemente 62 mit den jeweils links- und rechtsseitig benachbarten Stützringelementen 62 noch zusätzlich über Schrauben oder dergleichen Verbindungselemente zu verbinden, soweit dies gewünscht oder auch konstruktiv geboten erscheint.

Die einzelnen segmentartigen Stützringelemente 62 lassen sich somit zu einem kompakten Stützring in Form eines Ringes oder Kreisringes montieren und zusammensetzen bzw. zusammenziehen, dessen Umfangsfläche der Längsachse 40 der Tragstruktur 30 abgewandt ist und eine Druckfläche 66 für das Spannbetätigungselement 50 bildet. Die Druckfläche 66 ist somit ring- oder kreisringförmig ausgebildet. Die aufzunehmenden und zu übertragenden Belastungen können auf diese Weise über den gesamten Umfang des Stützringes gleichmäßig und/oder gleichbleibend verteilt werden, ohne die Tragstruktur, das Stützelement der Tragstruktur oder auch die Tragelemente zu beanspruchen.

Gemäß den Fig. 5A bis 6B umfassen die zwei Spannbetätigungselemente 50 der Spanneinrichtung 34 eine Druckfläche 68, die der Längsachse 40 der Tragstruktur 30 zugewandt ist. Die Druckfläche 68 steht mit der Druckfläche 66, welche der Längsachse 40 der Tragstruktur 30 abgewandt und entsprechend ausgebildet ist, in gegenseitigem Kontakt und Eingriff.

Die zwei Spannbetätigungselemente 50 der Spanneinrichtung 34 sind somit unmittelbar über die segmentartig ausgebildeten Stützringelemente 62, die an den Enden 64 der aus- und einklappbaren Tragelemente 54 montierbar sind, und damit mittelbar an der Tragstruktur 30 oder dem Stützelement 50 der Tragstruktur 30 radial nach innen abgestützt.

Wie insbesondere auch in den Fig. 5A bis 6B verdeutlicht ist, umfassen die zwei Spannbetätigungselemente 50 der Spanneinrichtung 34 weiter eine Druckfläche 70, welche der Längsachse 40 der Tragstruktur 30 abgewandt ist. Die Spannelemente 46 besitzen zugleich jeweils eine Druckfläche 72, welche der Längsachse 40 der Tragstruktur 30 zugewandt ist.

Die Druckflächen 70, 72 stehen in gegenseitigem Kontakt und Eingriff, derart, dass die Spannelemente 46 durch Volumenänderung des/der Spannbetätigungselemente/s 50 im Wesentlichen senkrecht oder im Wesentlichen senkrecht zu der Längsachse 40 der Tragstruktur 30 radial von innen nach außen, und umgekehrt, verschiebbar sind.

Die zwei Spannbetätigungselemente 50 sind insoweit, wie aus den Fig. 3 bis 6B ersichtlich ist, zwischen den Enden 64 der Tragelemente 54 bzw. den Stützringelementen 62 kreisförmig über den Umfang verlaufend angeordnet und an der von den segmentartigen Stützringelementen 62 zu einem Ring oder Kreisring gebildeten Druckfläche 66 radial nach innen abstützbar. Über die Druckfläche/n 72 der Spannelemente 46 erfolgt deren radiale Verschiebung durch Volumenänderung des Spannbetätigungselementes 50 von innen nach außen hin zu den zwei Bauteilen 12', 12''.

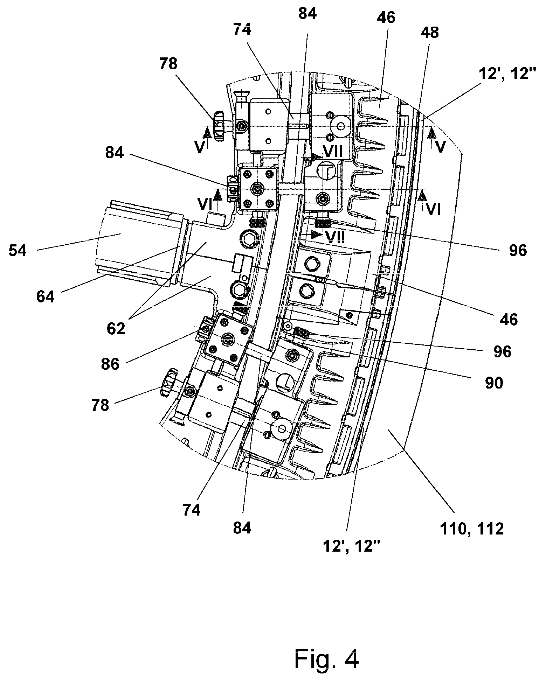

Zur Aufnahme, Führung und radialen Verschiebung der Spannelemente 46 umfasst die Spanneinrichtung 34, wie die Fig. 5A und 5B zeigen, Führungselemente 74, insbesondere in Form von Bolzen. Bei der dargestellten Ausführungsform in den Fig. 4, 5A und 5B sind vier Führungselemente 74, nämlich zwei untere und zwei obere Führungselemente 74, vorgesehen, auch wenn die Anzahl von Führungselementen 74 beliebig geändert werden kann. Die Führungselemente 74 sind an den Enden 64 der Tragelemente 54 bzw. von den segmentartigen Stützringelementen 62 aufgenommen. Die Führungselemente 74 sind in die segmentartigen Stützringelemente 62 eingesetzt und mit den Stützringelementen 62 über Rastmittel 76 oder dergleichen unverlierbar verbunden. Gleichzeitig sind die Führungselemente 74 in den segmentartigen Stützringelementen 62, vorzugsweise ohne Spiel, längsverschieblich gehalten. Um die Verschiebung der Führungselemente 74 in den Stützringelementen 62 zu erleichtern, sind die Führungselemente 74 zusätzlich jeweils mit einem Betätigungsknopf 78 oder dergleichen -griff versehen. Die Führungselemente 74 eines zugeordneten Spannelementes 46 erstrecken sich jeweils im Wesentlichen parallel zueinander.

Über die Führungselemente 74 sind die Spannelemente 46 von den segmentartig ausgebildeten Stützringelementen 62 aufgenommen und radial verschieblich geführt. Vorzugsweise sind zwischen den Führungselementen 74 und den Spannelementen 46 Buchsen 80 vorgesehen, die wenigstens teilweise oder vollständig aus elastischem Material, insbesondere aus Gummi, bestehen. Damit wird einer Schwergängigkeit bzw. sogar Verklemmung der Spannelemente 46 bei deren radialer Verschiebung entgegengewirkt. Bei der dargestellten Ausführungsform sind die Buchsen 80 zusätzlich mit Buchsen 82 aus Metall oder Kunststoff, welche den Führungselementen 74 unmittelbar zugeordnet sind, unterlegt und verstärkt. Zugleich wird damit erfindungsgemäß in ganz vorteilhafter Weise die Leichtgängigkeit bei der radialen Verschiebung der Spannelemente 46 begünstigt.

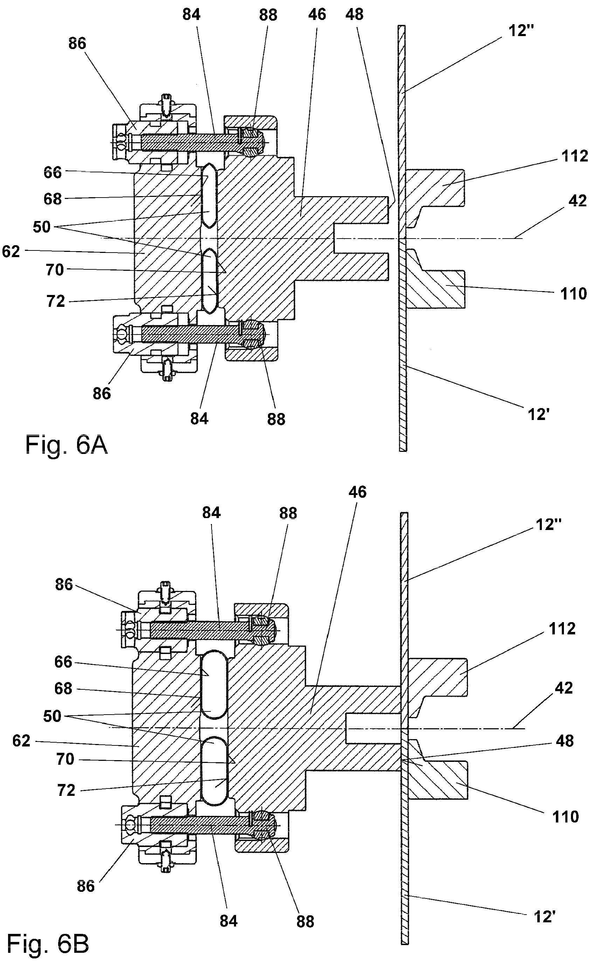

Wie in den Fig. 6A und 6B dargestellt ist, umfasst die Spanneinrichtung 34 darüber hinaus Anschlag- oder Begrenzungselemente 84, insbesondere Bolzen. Bei der dargestellten Ausführungsform sind vier Anschlag- oder Begrenzungselemente 84, nämlich zwei untere und zwei obere Anschlag- oder Begrenzungselemente 84, vorgesehen, auch wenn die Anzahl von Anschlag- oder Begrenzungselementen 84 beliebig geändert werden kann.

Die Anschlagelemente 84 dienen einer Begrenzung der Verschiebbarkeit der wenigstens zwei Spannelemente 46 radial nach außen. Die Anschlagelemente 84 sind zwischen den Spannelementen 46 und den segmentartig ausgebildeten Stützringelementen 62 angeordnet. Die Anschlag- oder Begrenzungselemente 84 sind in die segmentartigen Stützringelemente 62 eingesetzt und mit den Stützringelementen 62 durch Rastmittel 85 oder dergleichen unverlierbar verbunden. Gleichzeitig sind die Führungselemente 74 in den segmentartigen Stützringelementen 62 - vorzugsweise ohne Spiel - längsverschieblich gehalten. Um die Verschiebung der Anschlagelemente 84 in den Stützringelementen 62 zu erleichtern, sind Anschlagelemente 84 zusätzlich mit jeweils mit einem Betätigungsknopf 86 oder dergleichen -griff versehen.

Vorzugsweise sind die Anschlagelemente 84 von bzw. in den Spannelementen 46 gelenkig aufgenommen. Bei der gezeigten Ausführung der erfindungsgemäßen Vorrichtung 10 sind die Anschlagelemente 84 von den Spannelementen 46 über (Kugel- oder Kardan-)Gelenke 88 aufgenommen. Auf diese Weise wird gleichermaßen einer Schwergängigkeit bzw. sogar Verklemmung der Spannelemente 46 bei deren radialer Verschiebung begegnet. Die Anschlagelemente 84 sind in den Spannelementen 46 durch Befestigungsmittel 89, wie einen Sprengring oder dergleichen, in den Spannelementen 46 lösbar festgelegt.

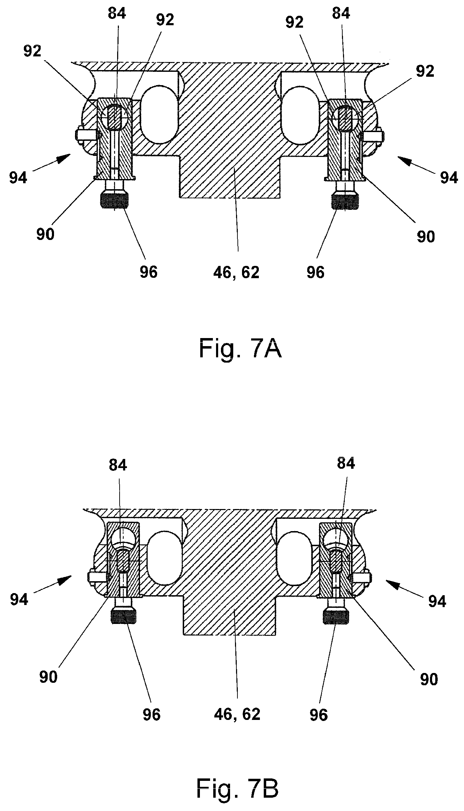

Bezugnehmend auf die Fig. 7A und 7B umfasst die Spanneinrichtung 34 weiter Verriegelungselemente 90. Die Verriegelungselemente 90 sind jeweils einem Anschlagelement 84 zugeordnet, um das jeweilige Anschlagelement 84 zu verriegeln und zu entriegeln und die Spannelemente 46 damit zeitweise im Spannzustand festzulegen.

Die Verriegelungselemente 90 sind schieberartig ausgebildet und wirken jeweils mit zwei seitlichen Nuten 96 in dem Anschlagelement 84 zusammen, in welche das entsprechende Verriegelungselement 90 quer zur Längsachse des Anschlagelementes 84 eingreift und das Anschlagelement 84 somit in Längsrichtung sperrt. In der Fig. 7A ist das Verriegelungselement 90 im entriegelten Zustand gezeigt, in welchem das Anschlagelement 84 freibeweglich ist. In der Fig. 7B ist das Verriegelungselement 90 im verriegelten Zustand dargestellt, in welchem das Verriegelungselement 90 in die Nuten des Anschlagelementes 84 eingreift.

Das Verriegelungselement 90 selbst ist mit Rastmitteln 94, umfassend Rastausnehmungen in dem Verriegelungselement 90 und Rastvorsprünge in den Spannelementen 46 bzw. Stützringelementen 62, versehen, welche entsprechend den Fig. 7A und 7B in zwei Rastpositionen verbringbar sind.

Nachdem die Spannbetätigungselemente 50 schlauchförmig ausgebildet sind, lässt sich auf diese Weise erreichen, dass die Spannelemente 46 während der gesamten Bearbeitung des Behälters 12 bzw. der Bauteile 12', 12'' im (maximalen) Spannzustand gehalten wird. Selbst bei Auftreten einer Undichtigkeit eins Spannbetätigungselementes 50, die zwangsweise mit einer radialen Verschiebung des/der Spannelemente/s 46 in dem defekten Bereich des Spannbetätigungselementes 50 verbunden wäre, verbleibt/verbleiben das/die Spannelement/e im (maximalen) Spannzustand. Eine fehlerhafte Bearbeitung oder sogar Beschädigung des Behälters 12 bzw. der Bauteile 12', 12'' beim Fräsen oder Verschweißen sind sicher ausgeschlossen.

Um die Verriegelungselemente 90 einfach und schnell zu montieren bzw. zu demontieren bzw. zu betätigen, sind die Verriegelungselemente 90 zusätzlich mit jeweils mit einem Dreh-, Schraub- oder dergleichen Betätigungsknopf 96 oder -griff ausgestattet

Aus der Fig. 2 geht darüber hinaus hervor, dass der Spanneinrichtung 34 wenigstens eine Einrichtung 98 zur Bearbeitung mindestens eines Teils der zwei segmentartig ausgebildeten, dünnwandigen und hohlprofilierten Bauteile 12', 12'' etwa in einem Bereich der gemeinsamen Trennebene 38 oder einem dazu benachbarten Bereich zugeordnet ist. Die Bearbeitungseinrichtung 98 kann in diesem Zusammenhang als Schweiß-, Löt- oder Klebeeinrichtung bzw. Schneideeinrichtung bzw. Schleif-, Fräs-, Dreh- oder dergleichen flächen- und spanbearbeitende sowie güte- und materialprüfende Einrichtung ausgebildet sein.

Bei der Ausführungsform der erfindungsgemäßen Vorrichtung 10 sind zwei Bearbeitungseinrichtungen 98 vorgesehen, nämlich zum einen eine Fräseinrichtung 100 und zum anderen eine Schweißeinrichtung 102, vorzugsweise zum Rührreib (FSW)-Schweißen oder Wolfram-Inertgas (WIG)-Schweißen. Die Schweißeinrichtung 104 kann gleichsam auf Metall-Inertgas (MIG)-, Elektronenstrahl (EB)-, Laser-, Plasmaschweißen oder jedem anderen geeigneten Schweißverfahren basieren.

Die zwei Fräs- und Schweißeinrichtungen 100, 102 sind entsprechend der Fig. 2 zueinander über den Umfang der Tragstruktur 30 um 180° verteilt angeordnet. Ohne im Einzelnen dargestellt zu sein, ist es dagegen ebenso möglich, die zwei Fräs- und Schweißeinrichtungen 100, 102 unmittelbar benachbart zueinander anzuordnen, um zum Beispiel die Bearbeitungsabläufe noch weiter zu optimieren.

Weiterhin ist es auch denkbar, alternativ oder kumulativ zu der Fräseinrichtung 100 eine Bearbeitungseinrichtung 98 in Form einer oder mehrerer Gegendruckrolle/n oder dergleichen vorzusehen, um auftretende radiale Belastungen, insbesondere (Druck-)Kräfte und Momente, welche durch eine auf Rührreib (FSW)-Schweißen basierende Schweißeinrichtung 102 erzeugt werden, zu kompensieren. Die Gegendruckrolle/n würde/n dann im Bereich der Fräseinrichtung 100 und/oder dazu seitlich benachbart über den Umfang der Tragstruktur 30, insbesondere symmetrisch, verteilt angeordnet sein, um den Behälter 12 bzw. die Bauteile 12', 12'' außenseitig abzustützen. Auf diese Weise lassen sich radiale Druckbelastungen von 4 bis 5 t und mehr durch das Rührreib (FSW)-Schweißwerkzeug abfangen und Beschädigungen an dem Behälter 12 bzw. den Bauteilen 12', 12'' und der Tragstruktur 30 vermeiden.

Die Bearbeitungseinrichtung 98 ist gegenüber der Tragstruktur 30 und der Spanneinrichtung 34 der Vorrichtung 10 nach der Erfindung relativ entsprechend Doppelpfeil 104 in vertikaler Richtung verstellbar, so dass jede nur erdenkliche Position gegenüber dem/den zu bearbeitenden Bauteil/en 12', 12'' eingenommen und angefahren sowie erreicht werden kann.

Ohne im Einzelnen dargestellt zu sein, kann die Spanneinrichtung 34 an der Tragstruktur 30 gegenüber der Bearbeitungseinrichtung 98 zur Bearbeitung der zwei segmentartig ausgebildeten, dünnwandigen und hohlprofilierten Bauteile 12', 12'' relativ drehbar und/oder verschwenkbar angeordnet sein, etwa um die Längsachse 40 der Tragstruktur 30 bzw. die Drehachse 38 der Tragelemente 36, 36'. Durch die relative Verdrehbarkeit ist eine zeitgleiche, kontinuierliche Bearbeitung der eingespannten und ausgerichteten Bauteile 12', 12'', zum Beispiel ein Fräsen der Schweiß- und Nahtstelle zur Vorbereitung des nachfolgenden Schweißens, ermöglicht, wodurch die Güte der Verbindung zwischen den beiden Bauteilen 12', 12'' erheblich verbessert wird. Alternativ oder kumulativ ist es dabei ohne weiteres möglich, die Spanneinrichtung 34 und/oder die Bearbeitungseinrichtung 98 drehbar auszubilden. Durch die relative Verschwenkbarkeit ist es zudem möglich, jede Schweißnaht in der jeweils optimalen Lage erzeugen, indem die flüssige Schweißschmelze in optimale/r Lage, nämlich in sogenannte/r Wannenlage zur Erdanziehung, ausgerichtet und erzeugt wird.

Bei der in der Fig. 2 dargestellten Ausführungsform der Vorrichtung 10 nach der Erfindung sind zusätzlich konstruktive Maßnahmen verwirklicht, um die zwei Bauteile 12', 12'' parallel zu der Längsachse 48 der Tragstruktur 30 mit einem Druck zu beaufschlagen und damit in ständigen Kontakt zueinander zu bringen und zu halten. Insbesondere beim Werkzeugeingriff durch die wenigstens eine Bearbeitungseinrichtung 98 ist es aus Gründen einer hohen Fertigungsgenauigkeit erforderlich, dass die zwei Bauteile 12', 12'' im Bereich von deren gemeinsamer Trennebene 42 ohne jedes Spiel an einander zur gegenseitigen Anlage kommen und während der Bearbeitung unter Druck in ständigem Kontakt bleiben.

Zu diesem Zweck ist bei dem dargestellten Ausführungsbeispiel eine Druckrolleneinrichtung 106 vorgeschlagen, die unmittelbar oberhalb der Bearbeitungseinrichtung 98 angeordnet ist. Die Druckrolleneinrichtung 106 bringt über eine Druckrolle (nicht näher gezeigt) einen gleichbleibenden Druck auf den stirnseitigen Rand 108 des oberen Bauteiles 12' und somit gleichzeitig auf das untere Bauteil 12'' auf und hält somit die beiden Bauteile 12', 12'' in ständiger Berührung zueinander. Üblicherweise sind die Bearbeitungseinrichtung 98 und die Druckrolleneinrichtung 106 gegenüber der Tragstruktur 30 feststehend angeordnet. Sofern die Bearbeitungseinrichtung 98 gegenüber zum Beispiel der Tragstruktur 30 während der Bearbeitung eine relative Drehung ausführt, folgt jedoch auch die Druckrolleneinrichtung 106 dieser Drehung entsprechend.

Durch eine solche konstruktive Ausgestaltung der Vorrichtung 10 nach der Erfindung ist es ohne weiteres möglich, zwei segmentartig ausgebildete, dünnwandige und hohlprofilierte Bauteile 12', 12'' einzuspannen und auszurichten sowie zu bearbeiten, was nachfolgend anhand der Vorrichtung 10 näher erläutert wird:

Zunächst wird ein Bauteil 12'' auf dem Tisch 40 der Vorrichtung 10 entsprechend der Fig. 2 aufgesetzt, gegebenenfalls über Adapterelemente positioniert, mittels Zentrierelementen und Klammerelementen ausgerichtet und lösbar festgelegt bzw. gehalten. Die Spanneinrichtung 34, die von der Tragstruktur 30 aufgenommen und gehalten ist, ist durch eine entsprechende Ausnehmung oder Öffnung, wie zum Beispiel eine Polöffnung, hindurch- und in das Bauteil 12'' eingeführt.

Die Führungsbuchse 56 wird manuell oder durch die Antriebseinrichtung 58 und die Linearachsen 60 gegenüber dem Stützelement 52 der Tragstruktur 30 nach oben bewegt. Die Tragelemente 54 an der Führungsbuchse 56 werden dadurch ausgeklappt und aus einer vertikalen Stellung in eine horizontale Stellung verbracht. Die Enden 64 der teleskopierbaren Tragelemente 54 werden sodann radial nach außen in die vorgesehene Stellung ausgefahren.

Entsprechend der Fig. 4 werden sämtliche segmentartigen Stützringelemente 62 an den zugeordneten Enden 64 der Tragelemente 54 montiert, d.h. auf- bzw. angesetzt. Gegebenenfalls können die aufgesetzten Stützringsegmente 62 optional zusätzlich mittels Schrauben gesichert werden, um ein selbsttätiges Lösen von den Enden 64 und damit Herunterfallen auf das Bauteil 12'' sowie eine Beschädigung des Bauteiles 12'' zu vermeiden.

An jedem Stützringelement 62 befinden sich gemäß den Fig. 5A bis 6B jeweils zwei untere und zwei obere Führungselemente 74 sowie zwei untere und zwei obere Anschlag- oder Begrenzungselemente 84. Die Führungselemente 74 und die Anschlagelemente 84 sind in die segmentartigen Stützringelemente 62 eingesetzt und mit den Stützringelementen 62 durch Rastmittel 76, 85 und -bolzen lösbar, zugleich unverlierbar verbunden. Sämtliche Führungselemente 74 und die Anschlagelemente 84 sind beim bzw. werden nach dem Anbringen der Stützringelemente 62 an den Enden 64 der Tragelemente 54 aus den Stützringelementen 62, soweit es deren Längsverschieblichkeit zulässt, (in den Fig. 5A bis 6B nach links) herausgezogen. Die Führungselemente 74 und die Anschlagelemente 84 stehen über die Stützringelemente 62 der Längsachse 44 der Tragstruktur 30 zugewandt hinaus.

Die Stützringelemente 62 werden zu einem Stützring zusammengesetzt.

Die den Stützringelementen 62 zugeordneten Spannelemente 46 bzw. Spannbacken werden montiert. Dazu werden zunächst die zwei unteren Führungselemente 74 in die Stützringelemente 62, soweit es deren Längsverschieblichkeit zulässt, (in den Fig. 5A und 5B nach rechts) eingeschoben, so dass diese über die Stützringelemente 62 hinausragen, und zwar der Längsachse 44 der Tragstruktur 30 abgewandt. Die Spannelemente 46 werden gegenüber den Stützringelementen 62 ausgerichtet, auf die unteren Führungselemente 74 aufgesetzt bzw. in diese eingefädelt und durch die unteren Führungselemente 74, welche in die Spannelementen 46 eingreifen und diese durchgreifen, positioniert und gehalten.

Wenn sämtliche Spannelemente 46 montiert sind, werden die zwei Spannbetätigungselemente 50 - zunächst das untere und sodann das obere Spannbetätigungselement 50 - zwischen die Stützringelemente 62 und die Spannelemente 46 eingelegt. Die zwei Spannbetätigungselemente 50 sind drucklos (vgl. Fig. 5A und 6A).

Entsprechend den Fig. 5A bis 6B werden sodann die zwei oberen Führungselemente 74 in die Stützringelemente 62 und die Spannelemente 46 (in den Fig. 5A und 5B nach rechts) eingeschoben. Schließlich werden die sämtliche vier Anschlag- oder Begrenzungselemente 84 in die Stützringelemente 62 und in die Spannelemente 46 (in den Fig. 6A und 6B nach rechts) eingeschoben und in den Spannelementen 46 durch geeignete Befestigungsmittel 89, wie einen Sprengring oder dergleichen, lösbar befestigt.

Daraufhin wird ein weiteres Bauteil 12' auf das Bauteil 12' entsprechend der Fig. 2 aufgesetzt und positioniert. Eine erste Bearbeitung, wie eine Reinigung im Bereich der Trennebene 42 der zwei Bauteile 12', 12'', findet statt.

Die zwei Spannbetätigungselemente 50 erfahren durch die pneumatische oder hydraulische Antriebseinrichtung eine Volumenänderung (vgl. Fig. 5B und 6B), wodurch die Spannelemente 46 mit Druck radial nach außen verschoben werden und mit den zwei Bauteilen 12', 12'' in Kontakt kommen. Ein unterer und ein oberer Außenspannring 110, 112 wurden zuvor an die Außenflächen der zwei Bauteile 12', 12'' herangeführt, um einen entsprechenden Gegendruck aufzubringen.

Die Spannelemente 46 werden durch die zwei Spannbetätigungselemente 50 radial soweit nach außen verschoben, bis die Anschlag- oder Begrenzungselemente 84 in Wirkeingriff gelangen (vgl. Fig. 6B). Eine weitere Verschiebung der Spannelemente 46 ist durch diese Begrenzung ausgeschlossen.

Entsprechend den Fig. 7A und 7B werden die Spannelemente 46 in dieser Stellung durch Verriegelungselemente 90, welche jedem Anschlag- oder Begrenzungselemente 84 zugeordnet sind, verriegelt, d.h. quasi blockiert. Auf diese Weise ist sichergestellt, dass die Spannelemente 46 im (maximalen) Spannzustand verbleiben, selbst in dem Fall, dass eines oder beide der Spannbetätigungselemente 50 auch nur teilweise defekt gehen und somit den Druck nicht mehr aufrechterhalten könnten. Damit ist für eine zusätzliche Sicherheit gesorgt.

Zur Bearbeitung der Bauteile 12', 12 " durch die Bearbeitungseinrichtung 98 werden die Spannelemente 46 daher von den Verriegelungselementen 90 in der jeweils vorgesehenen Bearbeitungsstellung gehalten.

Nach vorgenommener Bearbeitung werden die Verriegelungselemente 90 gelöst und werden die Spannbetätigungselemente 50 pneumatisch oder hydraulisch deaktiviert. Durch die damit einhergehende Volumenabnahme der Spannbetätigungselemente 50 werden die Spannelemente 46 freigegeben und radial nach innen hin zu der Längsachse 40 der Tragstruktur 30 verschoben und kommen außer Kontakt mit den Bauteilen 12', 12'' bzw. dem Behälter 12.

Die Demontage der erfindungsgemäßen Spanneinrichtung 34 erfolgt sodann entsprechend in umgekehrter Reihenfolge. Schließlich lässt sich die Spanneinrichtung 34 aus den zwei Bauteilen 12', 12'' oder den Behälter 12 über die Ausnehmung oder Öffnung wieder herauszuführen und schließlich der Behälter aus der Vorrichtung 10 entnehmen.

## Patentansprüche

1. Vorrichtung zum Einspannen und Ausrichten von segmentartig ausgebildeten, dünnwandigen und hohlprofilierten Bauteilen (12', 12''), umfassend eine auf oder an einer Basis (32) abgestützte Tragstruktur (30) oder dergleichen Rahmengestell und eine von der Tragstruktur (30) aufgenommene und gehaltene Spanneinrichtung (34) zum Einspannen von zwei segmentartig ausgebildeten, dünnwandigen und hohlprofilierten Bauteilen (12', 12''), wobei die Spanneinrichtung (34) derart ausgebildet ist, dass die zwei Bauteile (12', 12'') im Bereich von deren gemeinsamer Trennebene (42) von der Spanneinrichtung (34) senkrecht zu der Längsachse (44) der Tragstruktur (30) und radial von innen nach außen beaufschlagbar sind, wenigstens zwei in einer gemeinsamen Ebene angeordnete und radial von innen nach außen, und umgekehrt, verschiebbare Spannelemente (46) mit die zwei Bauteile (12', 12'') beaufschlagenden Spannflächen (48) und mindestens ein die wenigstens zwei Spannelemente (46) gemeinsam beaufschlagendes Spannbetätigungselement (50), das schlauchförmig oder als ein Schlauch, insbesondere mit einer oder mehreren Kammern, ausgebildet ist und die wenigstens zwei Spannelemente (46) durch Volumenänderung senkrecht oder im Wesentlichen senkrecht zu der Längsachse (44) der Tragstruktur (30) radial von innen nach außen beaufschlagt, eine Vielzahl von aus- und einklappbaren Tragelementen (54) und wenigstens zwei segmentartig ausgebildete und zu einem mehrteiligen Stützring montierbare Stützringelemente (62) zur Abstützung des schlauchförmig oder als ein Schlauch ausgebildeten Spannbetätigungselementes (50) umfasst, wobei die Tragelemente (54) und die Stützringelemente (62) zwischen der Tragstruktur (30) oder einem Stützelement (52) der Tragstruktur (30) und dem mindestens einen Spannbetätigungselement (50) angeordnet sind.

2. Vorrichtung nach Anspruch 1, **dadurch gekennzeichnet, dass** das mindestens eine Spannbetätigungselement (50) der Spanneinrichtung (34) eine der Längsachse (44) der Tragstruktur (30) zugewandte Druckfläche (68) umfasst, die mit einer der Längsachse (44) der Tragstruktur (30) abgewandten, entsprechend ausgebildeten Druckfläche (66) der Tragstruktur (30) oder des Stützelementes (50) der Tragstruktur (30) in Eingriff steht, über die das mindestens eine Spannbetätigungselement (50) an der Tragstruktur (30) oder dem Stützelement (52) der Tragstruktur (30) radial nach innen abstützbar ist.

3. Vorrichtung nach Anspruch 1 oder 2, **dadurch gekennzeichnet, dass** das mindestens eine Spannbetätigungselement (50) der Spanneinrichtung (34) eine der Längsachse (44) der Tragstruktur (30) abgewandte Druckfläche (70) umfasst, die mit der Längsachse (44) der Tragstruktur (30) zugewandten, entsprechend ausgebildeten Druckflächen (72) der wenigstens zwei Spannelemente (46) in Eingriff steht, derart, dass die wenigstens zwei Spannelemente (46) durch Volumenänderung des mindestens einen Spannbetätigungselementes (50) senkrecht oder im Wesentlichen senkrecht zu der Längsachse (44) der Tragstruktur (30) radial von innen nach außen, und umgekehrt, verschiebbar sind.

4. Vorrichtung nach einem der Ansprüche 1 bis 3, **dadurch gekennzeichnet, dass** die Spanneinrichtung (34) eine pneumatische oder hydraulische Antriebseinrichtung zur Volumenänderung des mindestens einen Spannbetätigungselementes (50) senkrecht oder im Wesentlichen senkrecht zu der Längsachse (44) der Tragstruktur (30) umfasst.

5. Vorrichtung nach einem der Ansprüche 1 bis 4, **dadurch gekennzeichnet, dass** das mindestens eine Spannbetätigungselement (50) der Spanneinrichtung (34) an der Tragstruktur (30) oder dem Stützelement (52) der Tragstruktur (30) radial nach innen abstützbar ist.

6. Vorrichtung nach einem der Ansprüche 1 bis 5, **dadurch gekennzeichnet, dass** die wenigstens zwei segmentartig ausgebildeten Stützringelemente (62) zu einem mehrteiligen Stützring mit einer die der Längsachse (44) der Tragstruktur (30) abgewandten Druckfläche (66) bildenden Umfangsfläche montierbar sind, und/oder, insbesondere, dass das mindestens eine Spannbetätigungselement (50) der Spanneinrichtung (34) über die wenigstens zwei segmentartig ausgebildeten Stützringelemente (62), die an Enden (64) der aus- und einklappbaren Tragelemente (54) montierbar sind, radial nach innen abstützbar ist.

7. Vorrichtung nach einem der Ansprüche 1 bis 6, **dadurch gekennzeichnet, dass** die Spanneinrichtung (34) ein/e/n Führungsbuchse, -ring oder dergleichen -element (56), die/der/das von der Tragstruktur (30) oder dem Stützelement (52) der Tragstruktur (30) axial verschiebbar aufgenommen ist und an der/dem die aus- und einklappbaren Tragelemente (54) angelenkt sind, umfasst.

8. Vorrichtung nach einem der Ansprüche 1 bis 7, **dadurch gekennzeichnet, dass** die Spanneinrichtung (34) eine Antriebseinrichtung (58) zur axialen Verschiebung der/des Führungsbuchse, -ringes oder dergleichen -elementes (56) umfasst.

9. Vorrichtung nach einem der Ansprüche 1 bis 8, **dadurch gekennzeichnet, dass** die Antriebseinrichtung (58) der Spanneinrichtung (34) wenigstens eine manuell, elektromotorisch, mechanisch, pneumatisch oder hydraulisch angetriebene und synchronisierte Linearachse (60) oder Kolben zur Verschiebung der/des Führungsbuchse, -ringes oder dergleichen -elementes umfasst.

10. Vorrichtung nach einem der Ansprüche 1 bis 9, **dadurch gekennzeichnet, dass** die aus- und einklappbaren Tragelemente (54) teleskopartig ausgebildet sind.

11. Vorrichtung nach einem der Ansprüche 1 bis 10, **dadurch gekennzeichnet, dass** die Spanneinrichtung (34) Führungselemente (74), insbesondere Bolzen, über welche die wenigstens zwei Spannelemente (46) von den wenigstens zwei segmentartig ausgebildeten Stützringelementen (62) aufgenommen und radial verschieblich geführt sind, umfasst.

12. Vorrichtung nach einem der Ansprüche 1 bis 11, **dadurch gekennzeichnet, dass** die Führungselemente (74) die Spannelemente (46) über Buchsen (80), die wenigstens teilweise oder vollständig aus elastischem Material, insbesondere aus Gummi, gebildet sind, aufnehmen.

13. Vorrichtung nach einem der Ansprüche 1 bis 12, **dadurch gekennzeichnet, dass** die Spanneinrichtung (34) Anschlagelemente (84), insbesondere Bolzen, welche zwischen den wenigstens zwei Spannelementen (46) und den wenigstens zwei segmentartig ausgebildeten Stützringelementen (62) zur Begrenzung der Verschiebbarkeit der wenigstens zwei Spannelemente (46) radial nach außen angeordnet sind, umfasst.

14. Vorrichtung nach einem der Ansprüche 1 bis 13, **dadurch gekennzeichnet, dass** die Anschlagelemente (84) von den Spannelementen (46) gelenkig aufgenommen sind, und/oder, insbesondere, dass die Anschlagelemente (84) von den Spannelementen (46) insbesondere über (Kugel- oder Kardan-)Gelenke (88) aufgenommen sind.

15. Vorrichtung nach einem der Ansprüche 1 bis 14, **dadurch gekennzeichnet, dass** die Spanneinrichtung (34) Verriegelungselemente (90), welche jeweils einem Anschlagelement (84) zur Ver- und Entriegelung des jeweiligen Anschlagelementes (84) und zur zeitweisen Festlegung der wenigstens zwei Spannelemente (46) im Spannzustand zugeordnet sind, umfasst.

16. Vorrichtung nach einem der Ansprüche 1 bis 15, **dadurch gekennzeichnet, dass** die wenigstens zwei Spannelemente (46) der Spanneinrichtung (34) jeweils als eine Spannbacke ausgebildet sind.

17. Vorrichtung nach einem der Ansprüche 1 bis 16, **dadurch gekennzeichnet, dass** der Spanneinrichtung (34) wenigstens eine Einrichtung (98) zur Bearbeitung mindestens eines Teils der zwei segmentartig ausgebildeten, dünnwandigen und hohlprofilierten Bauteile (12', 12'') zugeordnet ist.

18. Vorrichtung nach Anspruch 17, **dadurch gekennzeichnet, dass** die wenigstens eine Einrichtung (98) zur Bearbeitung des mindestens einen Teils der zwei segmentartig ausgebildeten, dünnwandigen und hohlprofilierten Bauteile (12', 12'') als Schweiß- (102), Löt- oder Klebeeinrichtung bzw. Schneideeinrichtung bzw. Schleif-, Fräs- (100), Dreh- oder dergleichen flächen- und spanbearbeitende sowie güte- und materialprüfende Einrichtung ausgebildet ist.

19. Vorrichtung nach Anspruch 17 oder 18, **dadurch gekennzeichnet, dass** die Spanneinrichtung (34) an der Tragstruktur (30) gegenüber der wenigstens einen Einrichtung (98) zur Bearbeitung der zwei segmentartig ausgebildeten, dünnwandigen und hohlprofilierten Bauteile (12', 12'') relativ drehbar, insbesondere um die Längsachse (44) der Tragstruktur (30), und/oder verschwenkbar, insbesondere um eine horizontale Drehachse (38), angeordnet ist.

20. Verwendung einer Vorrichtung nach einem der vorhergehenden Ansprüche zum Einspannen, insbesondere in Umfangsrichtung spannungsfreien Einspannen, von segmentartig ausgebildeten, dünnwandigen und hohlzylindrischen Bauteilen (12', 12'') und Behältern, Domen sowie Boostergehäusen von Raketen oder ähnlichen hohlzylindrischen Geräten großer Abmessungen.

21. Verwendung einer Vorrichtung nach einem der Ansprüche 1-19 zum Bearbeiten, insbesondere zum Verschweißen, Verlöten oder Verkleben bzw. Schneiden bzw. Schleifen, Fräsen, Drehen oder dergleichen Flächenbearbeitung, von segmentartig ausgebildeten, dünnwandigen und hohlzylindrischen Bauteilen (12', 12'') und Behältern, Domen sowie Boostergehäusen oder ähnlichen hohlzylindrischen Geräten großer Abmessungen.

22. Verwendung einer Vorrichtung nach einem der Ansprüche 1-19 zum Herstellen von rotationssymmetrischen und/oder nicht rotationssymmetrischen schalenförmigen, insbesondere halbkugelförmig, kugelkappenförmig, kalottenförmig, ellipsoidkallotenförmig, konisch, elliptisch, in Cassini-Form, Halb-Torus-förmig oder mit dergleichen anderen Querschnittsformen ausgestalteten Bauteilen (12', 12'').

23. Verwendung einer Vorrichtung nach einem der Ansprüche 1-19 zum Herstellen von Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

## Claims

1. Device for clamping and orienting segmented, thin-walled and hollow profiled components (12', 12''), comprising a support structure (30) or similar frame structure supported on or against a base (32), and a clamping device (34) which is accommodated in and retained by the support structure (30) and is used for clamping two segmented, thin-walled and hollow profiled components (12', 12''), whereby the clamping device (34) is designed in such a way that the clamping device (34) can act upon the two components (12', 12'') perpendicular to the longitudinal axis (44) of the support structure (30) and radially outward in the region of the common separation plane (42) of the two components, and the clamping device comprises at least two clamping elements (46) which have clamping surfaces (48) acting upon the two components (12', 12'') and which are arranged on a common plane and can be moved radially outward from inside, and vice versa, and at least one clamping actuation element (50) commonly acting upon both the at least two clamping elements (46), which is designed like or as a hose, in particular with one or several chambers, and acts upon the at least two clamping elements (46) radially outward from inside by means of volume change by moving perpendicular to or substantially perpendicular to the longitudinal axis (44) of the support structure (30), a multitude of extendible and collapsible support elements (54) and at least two segmented support ring elements (62) that can be assembled into a multi-piece support ring for supporting the clamping actuation element (50) which is designed like or as a hose, whereby the support elements (54) and the support ring elements (62) are arranged between the support structure (30) or a support element (52) of the support structure (30) and the at least one clamping actuation element (50).

2. Device according to claim 1, **characterized in that** the at least one clamping actuation element (50) of the clamping device (34) comprises a pressure surface (68) facing the longitudinal axis (44) of the support structure (30), which is interlinked with an accordingly designed pressure surface (66) of the support structure (30) or of the support element (50) of the support structure (30) facing away from the longitudinal axis (44) of the support structure (30), which can be used to support the at least one clamping actuation element (50) radially inward against the support structure (30) or the support element (52) of the support structure (30).

3. Device according to claim 1 or 2, **characterized in that** the at least one clamping actuation element (50) of the clamping device (34) comprises a pressure surface (70) facing away from the longitudinal axis (44) of the support structure (30), which is interlinked with accordingly designed pressure surfaces (72) of the at least two clamping elements (46) facing towards the longitudinal axis (44) of the support structure (30), in such a way that the at least two clamping elements (46) can be moved radially outward from inside, and vice versa, by means of volume change of the at least one clamping actuation element (50) by moving perpendicular to or substantially perpendicular to the longitudinal axis (44) of the support structure (30).

4. Device according to one of the claims 1 to 3, **characterized in that** the clamping device (34) comprises a pneumatic or hydraulic driving device for changing the volume of the at least one clamping actuation element (50) perpendicular to or substantially perpendicular to the longitudinal axis (44) of the support structure (30).

5. Device according to one of the claims 1 to 4, **characterized in that** the at least one clamping actuation element (50) of the clamping device (34) can be supported radially inward against the support structure (30) or the support element (52) of the support structure (30).

6. Device according to one of the claims 1 to 5, **characterized in that** the at least two segmented support ring elements (62) can be mounted into a multi-piece support ring with a circumferential surface defining the pressure surface (66) facing away from the longitudinal axis (44) of the support structure (30), and/or, in particular, that the at least one clamping actuation element (50) of the clamping device (34) can be supported radially inward via the at least two segmented support ring elements (62), which can be mounted to ends (64) of the extendible and collapsible support elements (54).

7. Device according to one of the claims 1 to 6, **characterized in that** the clamping device (34) comprises a guide bushing, guide ring or similar guide element (56), which is accommodated by the support structure (30) or by the support element (52) of the support structure (30) in an axially movable manner and to which the extendible and collapsible support elements (54) are articulated.

8. Device according to one of the claims 1 to 7, **characterized in that** the clamping device (34) comprises a driving device (58) for axially moving the guide bushing, guide ring or similar guide element (56).

9. Device according to one of the claims 1 to 8, **characterized in that** the driving device (58) of the clamping device (34) comprises at least one manually, electromotive, mechanically, pneumatically or hydraulically driven and synchronized linear axis (60) or piston for moving the guide bushing, guide ring or similar guide element.

10. Device according to one of the claims 1 to 9, **characterized in that** the extendible and collapsible support elements (54) are designed in a telescopic manner.

11. Device according to one of the claims 1 to 10, **characterized in that** the clamping device (34) comprises guiding elements (74), in particular pins, by means of which the at least two clamping elements (46) are accommodated and guided by the at least two segmented support ring elements (62) in a radially movable manner.

12. Device according to one of the claims 1 to 11, **characterized in that** the guiding elements (74) accommodate the clamping elements (46) via bushings (80), which are made at least partially or fully of elastic material, in particular of rubber.

13. Device according to one of the claims 1 to 12, **characterized in that** the clamping device (34) comprises stop elements (84), in particular pins, which are arranged between the at least two clamping elements (46) and the at least two segmented support ring elements (62) for limiting the movability of the at least two clamping elements (46) radially outward.

14. Device according to one of the claims 1 to 13, **characterized in that** the stop elements (84) are accommodated by the clamping elements (46) in an articulated manner, and/or, in particular, that the stop elements (84) are accommodated by the clamping elements (46) in particular by means of (ball or universal) joints.

15. Device according to one of the claims 1 to 14, **characterized in that** the clamping device (34) comprises locking elements (90) which are each allocated to a stop element (84) for locking and unlocking the corresponding stop element (84) and for temporarily fixing the at least two clamping elements (46) in their clamped state.

16. Device according to one of the claims 1 to 15, **characterized in that** the at least two clamping elements (46) of the clamping device (34) are each designed as a clamping jaw.

17. Device according to one of claims 1 to 16, **characterized in that** the clamping device (34) is assigned to at least one unit (98) for processing at least one part of the two segmented, thin-walled and hollow-profiled components (12', 12'').

18. Device according to claim 17, **characterized in that** the at least one unit (98) for processing the at least one part of the two segmented, thin-walled and hollow-profiled components (12', 12'') is designed as a welding (102), soldering or gluing unit and/or cutting and/or grinding, milling (100), turning or similar machining as well as quality and material-checking unit.

19. Device according to claim 17 or 18, **characterized in that** the clamping device (34) is arranged on the support structure (30) opposite to the at least one unit (98) for processing the two segmented, thin-walled and hollow-profiled components (12', 12''), relatively rotatable, in particular about the longitudinal axis (44) of the support structure (30), and/or pivotable, in particular about a horizontal rotation axis (38).

20. Use of a device according to one of the preceding claims for mounting, in particular tension-free mounting in circumferential direction, of segmented, thin-walled and hollow cylindrical components (12', 12'') and containers, domes as well as booster cases of rockets or similar hollow cylindrical devices of large dimensions.

21. Use of a device according to one of claims 1 to 19 for processing, in particular welding, soldering or gluing and/or cutting and/or grinding, milling, turning or similar machining, of segmented, thin-walled and hollow cylindrical components (12', 12'') and containers, domes as well as booster cases or similar hollow cylindrical devices of large dimensions.

22. Use of a device according to one of claims 1 to 19 for manufacturing rotationally symmetric and/or not rotationally symmetric shell-shaped components (12', 12''), particularly hemispherical, spherical-shaped, dome-shaped, ellipsoid-spherical shaped, cone-shaped or ellipsoid components or components in Cassini-form, semi-torus form or other similar cross-sectional shapes.

23. Use of a device according to one of claims 1 to 19 for manufacturing domes for rocket fuel tanks, satellite tanks, parabolic antennas, parabolic reflector shells, parabolic solar collectors, headlamp housings, container floors, tower cupolas, pressure domes or similar.

## Revendications

1. Dispositif destiné au serrage et à l'alignement de composants (12', 12'') analogues à des segments, à parois minces et de forme cylindrique creuse, comprenant une structure porteuse (30) ou un châssis similaire, soutenu(e) sur une base (32), et un dispositif de serrage (34) reçu et maintenu par la structure porteuse (30), pour le serrage de deux composants (12', 12'') analogues à des segments, à parois minces et de forme cylindrique creuse, dans lequel le dispositif de serrage (34) est réalisé de telle façon que les deux composants (12', 12'') sont susceptibles d'être sollicitées, dans la région de leur plan de séparation commun (42), par le dispositif de serrage (34) perpendiculairement à l'axe longitudinal (44) de la structure porteuse (30) et radialement de l'intérieur vers l'extérieur, comprend au moins deux éléments de serrage (46), agencés dans un plan commun et déplaçables radialement de l'intérieur vers l'extérieur et inversement, avec des surfaces de serrage (48) qui sollicitent les deux composants (12', 12'') et au moins un élément d'actionnement de serrage (50) qui sollicite conjointement lesdits au moins deux éléments de serrage (46), élément qui est réalisé en forme de tuyau ou comme un tuyau, en particulier avec une ou plusieurs chambre(s) et qui sollicite lesdits au moins deux éléments de serrage (46) par modification de volume perpendiculairement ou sensiblement perpendiculairement à l'axe longitudinal (44) de la structure porteuse (30) radialement de l'intérieur vers l'extérieur, une pluralité d'éléments porteurs (54) susceptibles d'être déployés et rabattus, et au moins deux éléments de bague de soutien (62), réalisés en forme de segments et susceptible d'être montés pour donner une bague de soutien en plusieurs pièces, afin de soutenir l'élément d'actionnement de serrage (50) réalisé en forme de tuyau ou comme un tuyau, dans lequel les éléments porteurs (54) et les éléments de bague de soutien (62) sont agencés entre la structure porteuse (30) ou un élément de soutien (52) de la structure porteuse (30) et ledit au moins un élément d'actionnement de serrage (50).

2. Dispositif selon la revendication 1, **caractérisé en ce que** ledit au moins un élément d'actionnement de serrage (50) du dispositif de serrage (34) comprend une surface de pression (68) tournée vers l'axe longitudinal (44) de la structure porteuse (30), surface qui est en engagement avec une surface de pression (66), détournée de l'axe longitudinal (44) de la structure porteuse (30) et réalisée de façon correspondante, de la structure porteuse (30) ou de l'élément de soutien (50) de la structure porteuse (30), via laquelle ledit au moins un élément d'actionnement de serrage (50) est susceptible d'être soutenu radialement vers l'intérieur contre la structure porteuse (30) ou contre l'élément de soutien (52) de la structure porteuse (30).

3. Dispositif selon la revendication 1 ou 2, **caractérisé en ce que** ledit au moins un élément d'actionnement de serrage (50) du dispositif de serrage (34) comprend une surface de pression (70) détournée de l'axe longitudinal (44) de la structure porteuse (30), qui est en engagement avec des surfaces de pression (72), tournées vers l'axe longitudinal (44) de la structure porteuse (30) et réalisées de façon correspondante, desdits au moins deux éléments de serrage (46), de telle façon que lesdits au moins deux éléments de serrage (46) sont déplaçables radialement de l'intérieur vers l'extérieur et inversement, par variation de volume dudit au moins un élément d'actionnement de serrage (50) perpendiculairement ou sensiblement perpendiculairement à l'axe longitudinal (44) de la structure porteuse (30).

4. Dispositif selon l'une des revendications 1 à 3, **caractérisé en ce que** le dispositif de serrage (34) comprend un système d'entraînement pneumatique ou hydraulique pour la variation de volume dudit au moins un élément d'actionnement de serrage (50) perpendiculairement ou sensiblement perpendiculairement à l'axe longitudinal (44) de la structure porteuse (30).

5. Dispositif selon l'une des revendications 1 à 4, **caractérisé en ce que** ledit au moins un élément d'actionnement de serrage (50) du dispositif de serrage (34) est susceptible d'être soutenu radialement vers l'intérieur contre la structure porteuse (30) ou contre l'élément de soutien (52) de la structure porteuse (30).

6. Dispositif selon l'une des revendications 1 à 5, **caractérisé en ce que** lesdits au moins deux éléments de bague de soutien (62) réalisés sous forme de segments sont susceptibles d'être montés pour donner une bague de soutien en plusieurs pièces avec une surface périphérique formant la surface de pression (66) détournée de l'axe longitudinal (44) de la structure porteuse (30), et/ou, en particulier, **en ce que** ledit au moins un élément d'actionnement de serrage (50) du dispositif de serrage (34) est susceptible d'être soutenu radialement vers l'intérieur via lesdits au moins deux éléments de bague de soutien (62) réalisés en forme de segments, qui sont susceptibles d'être montés aux extrémités (64) des éléments porteurs (54) susceptibles d'être déployés et rabattus.

7. Dispositif selon l'une des revendications 1 à 6, **caractérisé en ce que** le dispositif de serrage (34) comprend une douille de guidage, une bague de guidage ou un élément de guidage similaire (56), qui est reçu(e) par la structure porteuse (30) ou par l'élément de soutien (52) de la structure porteuse (30) avec possibilité de translation axiale, et sur laquelle/lequel sont articulés les éléments porteurs (54) susceptibles d'être déployés et rabattus.

8. Dispositif selon l'une des revendications 1 à 7, **caractérisé en ce que** le dispositif de serrage (34) comprend un moyen d'entraînement (58) pour la translation axiale de la douille de guidage, de la bague de guidage ou de l'élément de guidage similaire (56).

9. Dispositif selon l'une des revendications 1 à 8, **caractérisé en ce que** le moyen d'entraînement (58) du dispositif de serrage (34) comprend au moins un axe linéaire (60) ou un piston, entraîné par voie manuelle, par moteur électrique, par voie mécanique, pneumatique ou hydraulique, et synchronisé, pour la translation de la douille de guidage, de la bague de guidage ou de l'élément de guidage similaire.

10. Dispositif selon l'une des revendications 1 à 9, **caractérisé en ce que** les éléments porteurs (54) susceptibles d'être déployés et rabattus sont réalisés de manière télescopique.

11. Dispositif selon l'une des revendications 1 à 10, **caractérisé en ce que** le dispositif de serrage (34) comprend des éléments de guidage (74), en particulier des goujons, via lesquels lesdits au moins deux éléments de serrage (46) sont reçus par lesdits au moins deux éléments de bague de soutien (62) réalisés sous forme de segments, et sont guidés en translation radiale.

12. Dispositif selon l'une des revendications 1 à 11, **caractérisé en ce que** les éléments de guidage (74) reçoivent les éléments de serrage (46) via des douilles (80) qui sont réalisées au moins partiellement ou entièrement en matériau élastique, en particulier en caoutchouc.

13. Dispositif selon l'une des revendications 1 à 12, **caractérisé en ce que** le dispositif de serrage (34) comprend des éléments de butée (84), en particulier des goujons, qui sont agencés entre lesdits au moins deux éléments de serrage (46) et lesdits au moins deux éléments de bague de soutien (62) réalisés à la manière de segments, pour limiter la possibilité de translation desdits au moins deux éléments de serrage (46) radialement vers l'extérieur.

14. Dispositif selon l'une des revendications 1 à 13, **caractérisé en ce que** les éléments de butée (84) sont reçus de manière articulée par les éléments de serrage (46), et/ou en particulier **en ce que** les éléments de butée (84) sont reçus par les éléments de serrage (46), en particulier via des articulations à rotule ou des articulations de cardan (88).

15. Dispositif selon l'une des revendications 1 à 14, **caractérisé en ce que** le dispositif de serrage (34) comprend des éléments de verrouillage (90), qui sont respectivement associés à un élément de butée (84) pour le verrouillage et le déverrouillage de l'élément de butée respectif (84) et pour l'immobilisation temporaire desdits au moins deux éléments de serrage (46) dans l'état serré.

16. Dispositif selon l'une des revendications 1 à 15, **caractérisé en ce que** lesdits au moins deux éléments de serrage (46) du dispositif de serrage (34) sont réalisés respectivement comme une mâchoire de serrage.

17. Dispositif selon l'une des revendications 1 à 16, **caractérisé en ce qu'**au moins un moyen (98) pour le traitement d'au moins une partie des deux composants (12', 12'') analogues à des segments, à parois minces et de forme cylindrique creuse, est associé au dispositif de serrage (34).

18. Dispositif selon la revendication 17, **caractérisé en ce que** ledit au moins un moyen (98) pour traiter au moins une partie des deux composants (12', 12'') analogues à des segments, à parois minces et de forme cylindrique creuse, est réalisé sous forme de moyen de soudure (102), moyen de brasage ou moyen de collage ou encore comme moyen de coupe ou moyen de meulage, de fraisage (100), de tournage ou de moyen similaire d'usinage de surface et d'usinage par enlèvement de matière, ainsi que de moyen de contrôle de qualité et de contrôle de matière.

19. Dispositif selon la revendication 17 ou 18, **caractérisé en ce que** le dispositif de serrage (34) est agencé sur la structure porteuse (30) à l'opposé dudit au moins un moyen (98) pour le traitement desdites deux composants (12', 12'') analogues à des segments, à parois minces et de forme cylindrique creuse, avec possibilité de rotation relative, en particulier autour de l'axe longitudinal (44) de la structure porteuse (30), et/ou avec possibilité de pivotement, en particulier autour d'un axe de rotation horizontal (38).

20. Utilisation d'un dispositif selon l'une des revendications précédentes pour le serrage, en particulier pour le serrage sans contrainte en direction de la circonférence, de composants (12', 12'') analogues à des segments, à parois minces et de forme cylindrique creuse, et de récipients, de coupoles ainsi que de boîtiers de fusées d'appoint ou des engins cylindriques creux similaires présentant de grandes dimensions.

21. Utilisation d'un dispositif selon l'une des revendications 1 à 19 pour l'usinage, en particulier pour le soudage, le brasage ou le collage, ou encore pour la coupe, le meulage, le fraisage, le tournage ou l'usinage de surfaces analogues, de composants (12', 12'') analogues à des segments, à parois minces et de forme cylindrique creuse, et de récipients, de coupoles ainsi que de fusées d'appoint ou des engins cylindriques creux similaires présentant de grandes dimensions.

22. Utilisation du dispositif selon l'une des revendications 1 à 19 pour la réalisation de composants (12', 12'') conçus à symétrie de révolution et/ou sans symétrie de révolution en forme de coque, en particulier en forme de demi-sphère, en forme de calotte sphérique, en forme de calotte, en forme de calotte ellipsoïdale, en forme conique, elliptique, en forme de "Cassini", en forme de demi-tore, ou présentant d'autres formes de section transversale similaires.

23. Utilisation du dispositif selon l'une des revendications 1 à 19 pour la réalisation de coupoles pour des réservoirs de carburant de fusées, des réservoirs de satellites, des antennes paraboliques, des coques à réflecteur en forme de parabole, des collecteurs solaires en forme de parabole, des boîtiers de projecteurs, des fonds de récipients, des coupoles de tourelles, de calottes sous pression, ou similaires.
